# EUROPEAN PATENT SPECIFICATION

(11) **EP 4 118 876 B1**
(45) Date of publication and mention of the grant of the patent: **02.08.2023**
(21) Application number: 21711066.7
(22) Date of filing: 02.03.2021
(51) Int. Cl.: H04W 36/36, H04W 36/00, H04W 88/06

(54) **MASTER NODE, SECONDARY NODE, USER EQUIPMENT, AND METHODS PERFORMED IN A COMMUNICATION NETWORK**
MASTER-KNOTEN, SEKUNDÄRKNOTEN, BENUTZERGERÄT UND IN EINEM KOMMUNIKATIONSNETZWERK DURCHGEFÜHRTE VERFAHREN
NOEUD MAÎTRE, NOEUD SECONDAIRE, ÉQUIPEMENT D'UTILISATEUR ET PROCÉDÉS MIS EN OEUVRE DANS UN RÉSEAU DE COMMUNICATION

(30) Priority: 09.03.2020 US 202062986798 P
(43) Date of publication of application: 18.01.2023
(60) Divisional application: 23180528.4
(73) Proprietor: Telefonaktiebolaget LM Ericsson (publ), 164 83 Stockholm (SE)
(72) Inventor: DA SILVA, Icaro L. J., 170 77 Solna (SE); EKLÖF, Cecilia, 187 41 Täby (SE)
(74) Representative: Ericsson
(86) International application number: PCT/SE2021/050183
(87) International publication number: WO 2021/183021

(56) References cited:
- GOOGLE: "(TP for NR_Mob_enh BL CR for TS 38.401) Introducing conditional mobility", 3GPP DRAFT; R3-201281, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Online; 20200224 - 20200306 8 March 2020 (2020-03-08), XP051861608, Retrieved from the Internet: URL:https://ftp.3gpp.org/tsg_ran/WG3_Iu/TS GR3_107_e/Docs/R3-201281.zip R3-201281 was R3-200764 (TP for NR Mob BL CR for TS 38.401) Introducing conditional mobility.doc [retrieved on 2020-03-08]
- LG ELECTRONICS INC: "Transaction ID Issue in CPC", 3GPP DRAFT; R2-2001536, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. E-Meeting; 20200224 - 20200306 14 February 2020 (2020-02-14), XP051849832, Retrieved from the Internet: URL:https://ftp.3gpp.org/tsg_ran/WG2_RL2/T SGR2_109_e/Docs/R2-2001536.zip R2-2001536 Transaction ID Issue in CPC.docx [retrieved on 2020-02-14]
- QUALCOMM INCORPORATED: "Remaining issues on RRC message handling for conditional intra-SN PSCell change without MN involvement", 3GPP DRAFT; R2-2001151, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. 20200224 - 20200306 14 February 2020 (2020-02-14), XP051849519, Retrieved from the Internet: URL:https://ftp.3gpp.org/tsg_ran/WG2_RL2/T SGR2_109_e/Docs/R2-2001151.zip R2-2001151.docx [retrieved on 2020-02-14]
- ZTE ET AL: "TS37.340 Stage2 Introduction of Rel-16 Mobility Enhancement in MR-DC", 3GPP DRAFT; R3-200321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. E-Meeting; 20200224 - 20200306 14 February 2020 (2020-02-14), XP051854042, Retrieved from the Internet: URL:https://ftp.3gpp.org/tsg_ran/WG3_Iu/TS GR3_107_e/Docs/R3-200321.zip R3-200321 TS37.340 Stage2 Introduction of Rel-16 Mobility Enhancement in MR-DC v9.doc [retrieved on 2020-02-14]

## Description

### TECHNICAL FIELD

Embodiments herein relate to a master node, a secondary node, a user equipment (UE), and methods performed therein regarding communication in a wireless communication network. Furthermore, a computer program product and a computer-readable storage medium are also provided herein. Especially, embodiments herein relate to handling or enabling communication, e.g. handling handover of the UE being in dual connectivity of different RATs, in the wireless communication network.

### BACKGROUND

In a typical wireless communication network, UEs, also known as wireless communication devices, mobile stations, stations (STA) and/or wireless devices, communicate via a Radio access Network (RAN) to one or more core networks (CN). The RAN covers a geographical area which is divided into service areas or cell areas, with each service area or cell area being served by a radio network node such as an access node e.g. a Wi-Fi access point or a radio base station (RBS), which in some radio access technologies (RAT) may also be called, for example, a NodeB, an evolved NodeB (eNodeB) and a gNodeB (gNB). The service area or cell area is a geographical area where radio coverage is provided by the radio network node. The radio network node operates on radio frequencies to communicate over an air interface with the UEs within range of the access node. The radio network node communicates over a downlink (DL) to the UE and the UE communicates over an uplink (UL) to the radio network node. The radio network node may be a distributed node comprising a remote radio unit and a separated baseband unit.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with UEs. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3^{rd} Generation Partnership Project (3GPP) and this work continues in the coming 3GPP releases, such as 5G networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies also known as new radio NR, the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Beamforming allows the signal to be stronger for an individual connection. On the transmit-side this may be achieved by a concentration of the transmitted power in the desired direction(s), and on the receive-side this may be achieved by an increased receiver sensitivity in the desired direction(s). This beamforming enhances throughput and coverage of the connection. It also allows reducing the interference from unwanted signals, thereby enabling several simultaneous transmissions over multiple individual connections using the same resources in the time-frequency grid, so-called multi-user Multiple Input Multiple Output (MIMO).

Conditional Handover (CHO).

Two new work items for mobility enhancements in LTE and NR have started in 3GPP in release 16. The main objectives of the work items are to improve the robustness at handover and to decrease the interruption time at handover.

One problem related to robustness at handover (HO) is that the HO Command, such as *RRCConnectionReconfiguration* with *mobilityControllnfo* and *RRCReconfiguration* with a reconfigurationWithSync field, is normally sent when the radio conditions for the UE are already quite bad. That may lead to that the HO Command may not reach the UE in time if the message is segmented or there are retransmissions.

In LTE and NR, different solutions to increase mobility robustness have been discussed in the past. One solution discussed in NR is called "conditional handover" or "early handover command". In order to avoid the undesired dependence on the serving radio link upon the time (and radio conditions) where the UE should execute the handover, the possibility to provide RRC signalling for the handover to the UE earlier should be provided. To achieve this, it should be possible to associate the HO command with a condition e.g. based on radio conditions possibly similar to the ones associated to an A3 event, where a given neighbour becomes X db better than target. As soon as the condition is fulfilled, the UE executes the handover in accordance with the provided handover command.

Such a condition could e.g. be that the quality of the target cell or beam becomes X dB stronger than the serving cell. A threshold Y used in a preceding measurement reporting event should then be chosen lower than the one in the handover execution condition. This allows the serving cell to prepare the handover upon reception of an early measurement report and to provide the *RRCConnectionReconfiguration* with *mobilityControllnfo* at a time when the radio link between the source cell and the UE is still stable. The execution of the handover is done at a later point in time (and threshold) which is considered optimal for the handover execution.

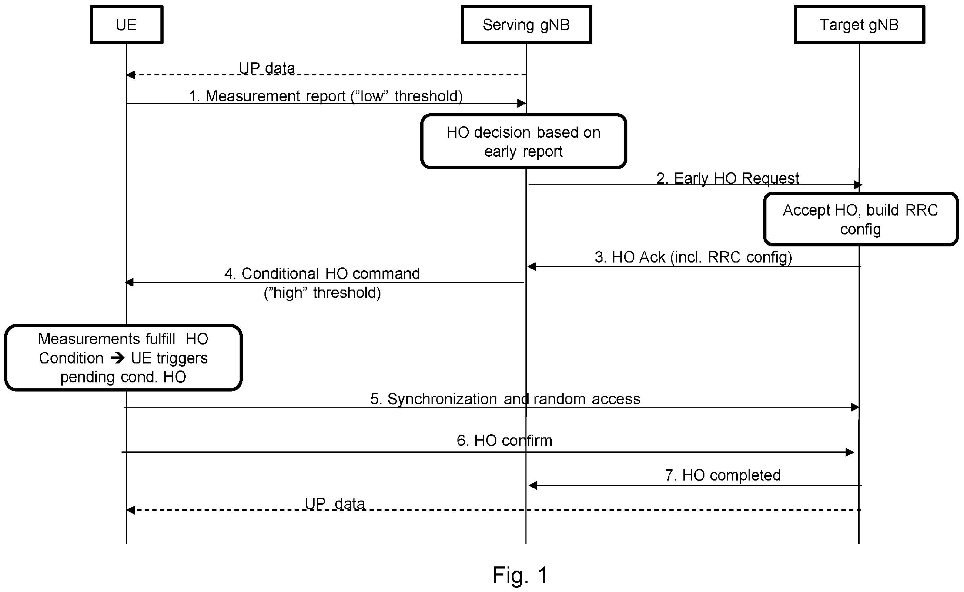

**Fig. 1** depicts an example with just a serving and a target cell and a Conditional handover execution. In practice there may often be many cells or beams that the UE reported as possible candidates based on its preceding radio resource management (RRM) measurements. The network should then have the freedom to issue conditional handover commands for several of those candidates. The *RRCConnectionReconfiguration* for each of those candidates may differ e.g. in terms of the HO execution condition, reference signal (RS) to measure and threshold to exceed, as well as in terms of the random access (RA) preamble to be sent when a condition is met.

While the UE evaluates the condition, it should continue operating per its current RRC configuration, i.e., without applying the conditional HO command. When the UE determines that the condition is fulfilled, it disconnects from the serving cell, applies the conditional HO command and connects to the target cell. These steps are equivalent to the current, instantaneous handover execution.

Conditional handover is described in CR R2-2001748.

### 9.2.3.X Conditional Handover

### 9.2.3.x. 1 General

*A Conditional Handover (CHO) is defined as a handover that is executed by the UE when one or more handover execution conditions are met. The UE starts evaluating the execution condition(s) upon receiving the CHO configuration, and stops evaluating the execution condition(s) once the execution condition(s) is met. The following principles apply to CHO:*
- *The CHO configuration contains the configuration of CHO candidate cell(s) generated by the candidate gNB(s) and execution condition(s) generated by the source gNB.*
- *An execution condition may consist of one or two trigger condition(s) (CHO events A 3*/*A 5, as defined in [12]). Only single RS type is supported and at most two different trigger quantities (e.g. RSRP and RSRQ, RSRP and SINR, etc.) can be configured simultaneously for the evalution of CHO execution condition of a single candidate cell.*
- *Before any CHO execution condition is satisfied, upon reception of HO command (without CHO configuration), the UE executes the HO procedure as described in clause 9.2.3.2, regardless of any previously received CHO configuration.*
- *While executing CHO, i.e. from the time when the UE starts synchronization with target cell, UE does not monitor source cell.*
*CHO is not supported for N2 based handover in this release of the specification.*

### 9.2.3. x. 2 C-plane handling

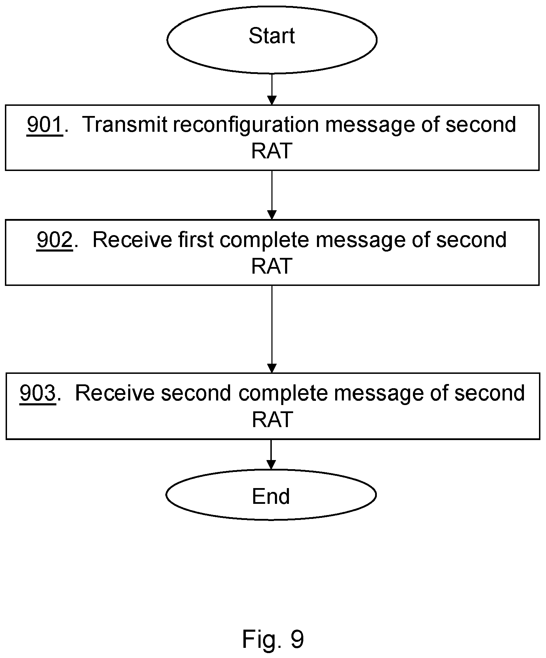

*As in intra-NR RAN handover, in intra-NR RAN CHO, the preparation and execution phase of the conditional handover procedure is performed without involvement of the 5GC; i.e. preparation messages are directly exchanged between gNBs. The release of the resources at the source gNB during the conditional handover completion phase is triggered by the target gNB. The figure below depicts the basic conditional handover scenario where neither the AMF nor the UPF changes: [...]*
*0*/*1. Same* as *step 0, 1 in* Figure 9.2.3.2.1-1 of section 9.2.3.2.1.
*2. The source gN8 decides to use CHO.*
*3. The source gN8 issues a Handover Request message to one or more candidate gNBs.*
*4. Same* as *step 4 in* Figure 9.2.3.2.1-1 of section 9.2.3.2.1.
*5. The candidate gNB sends HANDOVER REQUEST ACKNOWLEDGE message including configuration* of *CHO candidate cell to the source gNB.*
*6. The source gN8 sends an RRCReconfiguration message to the UE, containing the configuration* of *CHO candidate cell(s) and CHO execution condition(s).*
*7. UE sends an RRCReconfigurationComplete message to the source gNB.*
*8. UE maintains connection with source gN8 after receiving CHO configuration, and starts evaluating the CHO execution conditions for the candidate cell(s). If at least one CHO candidate cell satisfies the corresponding CHO execution condition, the UE detaches from the source gNB, applies the stored corresponding configuration for that selected candidate cell, synchronises to that candidate cell and completes the RRC handover procedure by sending RRCReconfigurationComplete message to the target gNB. The UE releases stored CHO configurations after successful completation of RRC handover procedure.*

### Primary secondary cell (PSCell) Change.

The UE can be configured with Dual Connectivity (DC), communicating both via a Master Cell Group (MCG ) and a Secondary Cell Group (SCG ). When the UE is configured with dual connectivity, the UE is configured with two Medium Access Control (MAC) entities: one MAC entity for the MCG and one MAC entity for the SCG. In Multi-Radio Dual Connectivity (MR-DC) the cell groups are located in two different logical nodes, i.e. different NG-RAN nodes, possibly connected via a non-ideal backhaul, one providing NR access and the other one providing either E-UTRA or NR access. One node acts as the Master Node (MN ) and the other as the Secondary Node (SN). The MN and SN are connected via a network interface and at least the MN is connected to the core network.

The operation in MR-DC involves different reconfiguration procedures, like secondary node addition, secondary node modification, secondary node release and secondary node change.

In the following, it is shown the signalling flow from TS 37.340 v.16.0.0 for the SN initiated SN change, also called PSCell Change (PC). Therein, the UE is operating in MR-DC i.e. connected to an MN and a Source SN (S-SN) and, S-SN decides to move the UE to a Target SN (T-SN), possibly based on reported measurements on S-SN and/or T-SN frequencies.

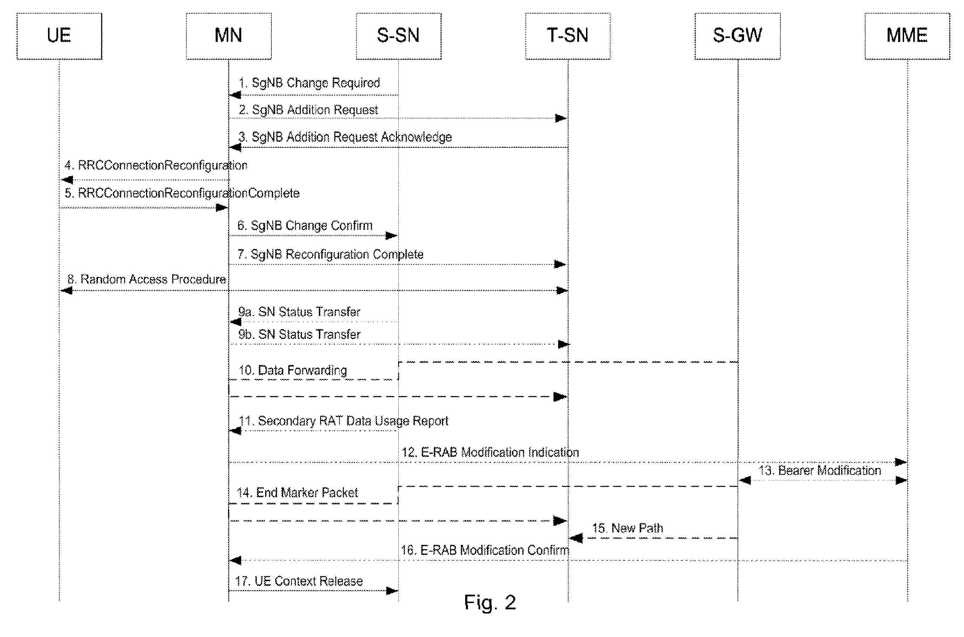

### Fig. 2 shows an SN initiated SN Change

Figure 2 shows an example signalling flow for the Secondary Node Change initiated by the SN:
1. The source SN initiates the SN change procedure by sending *SgNB Change Required* message which contains target SN ID information and **may include the SCG configuration (to support delta configuration) and measurement results related to the target SN.**
2/3. The MN requests the target SN to allocate resources for the UE by means of the SgNB Addition procedure, including the measurement results related to the target SN received from the source SN. If forwarding is needed, the target SN provides forwarding addresses to the MN. **The target SN includes the indication of the full or delta RRC configuration.**
4/5. **The MN triggers the UE to apply the new configuration.** The MN indicates the new configuration to the UE in the *RRCConnectionReconfiguration* message including the NR RRC configuration message generated by the target SN. **The UE applies the new configuration and sends the *RRCConnectionReconfigurationComplete* message, including the encoded NR RRC response message for the target SN, if needed.** In case the UE is unable to comply with (part of) the configuration included in the *RRCConnectionReconfiguration* message, it performs the reconfiguration failure procedure.
6. If the allocation of target SN resources was successful, the MN confirms the release of the source SN resources. If data forwarding is needed the MN provides data forwarding addresses to the source SN. If direct data forwarding is used for SN terminated bearers, the MN provides data forwarding addresses as received from the target SN to source SN. Reception of the *SgNB Change Confirm* message triggers the source SN to stop providing user data to the UE and, if applicable, to start data forwarding.
7. If the RRC connection reconfiguration procedure was successful, **the MN informs the target SN via *SgNB Reconfiguration Complete* message with the encoded NR RRC response message for the target SN, if received from the UE.**
8. The UE synchronizes to the target SN.
9. For SN terminated bearers using RLC AM, the source SN sends the SN Status Transfer, which the MN sends then to the target SN, if needed.
10. If applicable, data forwarding from the source SN takes place. It may be initiated as early as the source SN receives the *SgNB Change Confirm* message from the MN.
11.The source SN sends the *Secondary RAT Data Usage Report* message to the MN and includes the data volumes delivered to and received from the UE over the NR radio for the related E-RABs.
NOTE 4: The order the source SN sends the *Secondary RAT Data Usage Report* message and performs data forwarding with MN/target SN is not defined. The SgNB may send the report when the transmission of the related bearer is stopped.
12-16. If applicable, a path update is triggered by the MN.
17. Upon reception of the *UE Context Release* message, the source SN releases radio and C-plane related resources associated to the UE context. Any ongoing data forwarding may continue.

Other prior art examples are: 3GPP R3-201281, Title: "(TP for NR_Mob_enh BL CR for TS 38.401) Introducing conditional mobility", GOOGLE; 3GPP R2-2001536, Title: "Transaction ID Issue in CPC", LG ELECTRONICS Inc.; 3GPP R2-2001151, Title: "Remaining issues on RRC message handling for conditional intra-SN PSCell change without MN involvement", QUALCOMM Inc.; 3GPP R3-200321, Title: "TS37.340 Stage2 Introduction of Rel-16 Mobility Enhancement in MR-DC", ZTE et al.

### SUMMARY

The objective of the invention is achieved by means of the features of the appended independent claims.

This disclosure relates to the case where the SN PSCell is changed from one cell to another secondary cell, and even more specifically a conditional PSCell Change (CPC) which is being standardized in the release (rel)-16 work item for mobility enhancements. In rel-16 only the case intra-SN case without MN involvement for CPC is supported, i.e. where S-SN and T-SN are in the same node as in Fig. 2. That means that the secondary cell is changed, but both the old and the new secondary cell are in the same node. On the other hand, embodiments herein are not limited to this case only since in further releases inter-SN change based on CPC may be introduced.

Conditional PSCell Change (CPC).

RAN2 has agreed to support Conditional PSCell Change (CPC) procedure. Therein a UE operating in Multi-Radio Dual Connectivity (MR-DC) receives an radio resource control (RRC) Reconfiguration, e.g. an RRCReconfiguration message, containing an SCG configuration, e.g. an secondaryCellGroup of IE CellGroupConfig, with a reconfigurationWithSync that is stored and associated to an execution condition, e.g. a condition like an A3 event configuration, so that the stored message is only applied upon the fulfilment of the execution condition, upon which the UE would perform a PSCell change. The following are the agreements related to the procedure:

| **Agreements** | |
|---|---|
| 0 | Work in SN-initiated PSCell change for conditional PSCell change is prioritized. |
| 1 | Maintain Rel-15 principle that only one PScell is active at a time even with conditional PScell change. |
| 2 | For conditional PScell change, A3/A5 execution condition should be supported. |
| 3 | For conditional SN change, the source SN configuration can be used as the reference in generation of delta signalling for the candidate SNs. |
| 4 | Both the execution condition and the configuration for the candidate PSCell (as a container) can be included in the **RRCReconfiguration** |
| | **message generated by the SN** for intra-SN conditional PSCell change initiated by the SN (without MN involvement). |
| 5 | Signalling radio bearer 1 (**SRB1) can be used in all cases.** SRB3 may be used to transmit conditional PScell change configuration to the UE for intra-SN change without MN involvement. |
| 6 | limit to intra-SN change without MN involvement, i.e. no MN reconfiguration or decision needed but SRB1 can be used, in Rel-16. |

| **Same as for CHO, the following were agreed for CPC.** | |
|---|---|
| 1. | Usage of Conditional PSCell Addition/Change (CPAC) is decided by the network. The UE evaluates when the condition is valid. |
| 2. | Support configuration of one or more candidate cells for CPAC; |
| o | For further study (FFS) how many candidate cells (UE and network impacts should be clarified). FFS whether the number of candidate cells for CPAC different from that of CHO. |
| 3. | Allow having multiple triggering conditions (using "and") for CPAC execution of a single candidate cell. Only single RS type per CPAC candidate is supported. At most two triggering quantities (e.g. RSRP and RSRQ, RSRP and SINR, etc.) can be configured simultaneously. FFS on UE capability |
| 4. | Define an execution condition for conditional PSCell change by the measurement identity which identifies a measurement configuration |
| 5. | Cell level quality is used as baseline for Conditional NR PSCell change execution condition; |
| g. | Only single RS type (synchronization signal block (SSB) or channel sate information reference signal (CSI-RS)) per candidate PSCell is supported for PSCell change. |
| h. | At most two triggering quantities (e.g. reference signal received power (RSRP) and reference signal received quality (RSRQ), RSRP and signal to interference plus noise ratio (SINR)) can be configured simultaneously. For further study (FFS) on UE capability. |
| i. | Time to trigger (TTT) is supported for CPAC execution condition (as per legacy configuration) |
| 6. | No additional optimizations with multi-beam operation are introduced to improve random access channel (RACH) performance for conditional PSCell change completion with multi-beam operation. |
| 7. | For frequency range 1 (FR1) and FR2, leave it up to UE implementation to select the candidate PSCell if more than one candidate cell meets the triggering condition. UE may consider beam information in this. |
| 8. | UE is not required to continue evaluating the triggering condition of other candidate PSCell(s) during conditional SN execution. |

| **Agreements (RAN2#109e)** | |
|---|---|
| 1) | Similar to CHO, the following applies to CPC-intra-SN configuration |
| | - Reuse the RRCReconfiguration/RRCConnectionReconfiguration procedure to signal CPC-intra-SN configuration to UE. |
| | - The MN is not allowed to alter any content of the configuration from the SN which is carried in an RRC container. |
| | - Multiple candidate PSCells can be sent in either one or multiple RRC messages. |
| | - Use add/mod list + release list to configure multiple candidate PSCells. |
| | - CPC-intra-SN execution condition and/or candidate PSCell configuration can be updated by the SN, i.e. by modifying the existing CPC-intra-SN configuration. |
| 2) | Once the CPC-intra-SN procedure is executed successfully, the UE releases all CPC-intra-SN configurations stored on the UE side. |
| 3) | Upon the successful completion of conventional PSCell change procedure, the UE releases all CPC-intra -SN configurations. |
| 4) | The SCG failure information procedure can be used for CPC-intra-SN procedure failure, due to radio link failure (RLF), T304-like timer expiry or compliance check failure.5) FFS: In case of SRB3, the MN is not informed of CPC-intra-SN execution by the UE.**6) If SRB3 is not configured, the UE first informs the MN that the message has been received. Then the UE needs to provide the CPC complete message to the SN via the MN upon CPC execution.**7) CPC reuses the IE defined for CHO. The field name of the IE could be changed to reflect that the IE is used for both CHO and CPC. |
| S1_1: | While executing CPC procedure, the UE continues to receive RRC reconfiguration from the MN. However, the UE should finalise the ongoing CPC execution before processing the RRC message received from the MN (same as in the conventional PSCell change). i.e. legacy behaviour and no specific UE requirement. |
| **S1_2:** | **As in legacy PSCell change, the UE sends RRCReconfigurationComplete to the MN at execution of CPC when no SRB3 is configured and the MN informs the SN. i.e the complete message to MN includes an embedded complete message to the SN.** |
| S1_3: | The UE sends RRCReconfigurationComplete to the MN at configuration of CPC when no SRB3 is configured and the MN informs the SN. i.e. the complete message to the MN includes an embedded complete message to the SN. |
| S1_4. | Upon RLF on PCell during the execution of Conditional PSCell change for intra-SN change without MN involvement, the UE supports the Rel-16 MR-DC procedures, i.e. performs connection re-establishment procedure without any fast MCG link recovery. |
| S1_5: | Support of CHO and CPC-intra-SN configuration simultaneously is not considered in Rel-16. Leave it up to the network solution to ensure there is no simultaneous CHO and CPC configuration. |
| S2_6: | Reconfirm the use of SCG failure information upon declaring SCG failure in the procedure of the conditional PSCell change. |
| S2_7. | When the conditional PSCell configuration received over SRB3 is invalid, UE initiates SCG failure information procedure to report to the MN about the SN change failure due to invalid configuration (legacy procedure). |
| S2_9. | Like CHO, UE shall follow the below procedures for handling the T310 and T304 timers during conditional PSCell addition/change procedure for EN-DC, NGEN-DC, NR-DC cases: |
| • | UE shall not stop MN T310 or SN T310 and shall not start T304 when it receives configuration of a CPC-intra-SN |
| • | The timer T310 (SN only in case of SN Change) is stopped and timer T304-like is started when the UE begins execution of a CPC-intra-SN. |
| S3_11. | UE checks the validity of conditional PSCell change execution criteria configuration immediately on receiving the conditional PSCell change RRC Reconfiguration message, either embedded in the MN RRC message over SRB1 or received over SRB3 (same as CHO). |
| S3_12. | Introduce no specification changes regarding compliance checking of embedded Reconfiguration message containing configuration of conditional PSCell candidate (same as for CHO). |
| S2_8 | UE performs connection re-establishment procedure or actions upon going to RRC_IDLE (legacy procedure) when the conditional PSCell configuration received over SRB1 is invalid, i.e. UE cannot comply with the embedded PSCell configuration for intra-SN Change |

As part of developing embodiments herein one or more problems were identified. A first problem embodiments herein address concerns the scenario where the UE is operating in EUTRAN NG-RAN - Dual Connectivity (EN-DC) i.e. having a connection with a Master Node (MN) which is an LTE eNB, and a Secondary Node (SN) which is an NR gNB; and, being configured with a Conditional PSCell Change (CPC) for an NR cell as target candidate. The UE is then monitoring execution condition(s) for triggering a CPC procedure.

The problem relates to the following agreements from RAN2#109e:

| **Agreements (RAN2#109e)** | |
|---|---|
| ... | |
| 6) | If SRB3 is not configured, the UE first informs the MN that the message has been received. Then the UE needs to provide the CPC complete message to the SN via the MN upon CPC execution. |
| ... | |
| S1_2: | As in legacy PSCell change, the UE sends RRCReconfigurationComplete to the MN at execution of CPC when no SRB3 is configured and the MN informs the SN. i.e the complete message to MN includes an embedded complete message to the SN. |
| ... | |

If SRB3 is configured, all communication occurs within the same RAT, particular the transmission of a complete message in NR format when CPC is executed (i.e. an RRCReconfigurationComplete transmitted via SRB3 to NR). However, when SRB3 is not configure, the UE needs to use the LTE's SRB1 to deliver any message that may later need to be forwarded to SN / NR side, assuming a procedure similar to legacy would be applicable here (i.e. MN forwards the RRCReconfigurationComplete to the target SN, via the SgNB Reconfiguration Complete message over the inter-node interface).

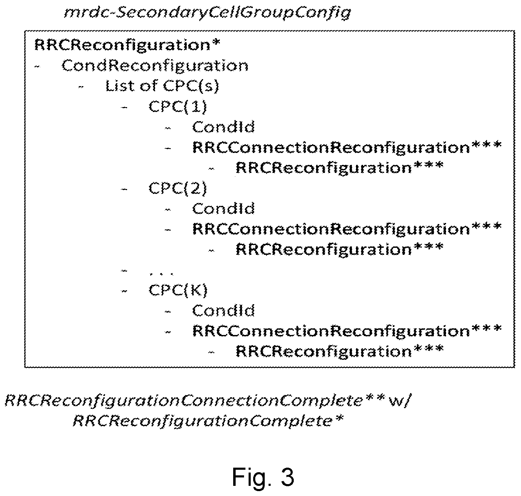

When CPC is configured, an RRCReconfiguration* is generated in the SN (i.e. at the NR gNB) including the execution condition configuration and an RRCReconfiguration*** per target candidate, see **Fig. 3**, to then be provided to the MN. This is somewhat equivalent to step 3 in Fig. 2: SN Change - SN initiated (TS 37.340)., where a version of the SgNB Addition Request Acknowledge message (to be used in CPC) from the T-SN to the MN may contain the RRCReconfiguration*.

That RRCReconfiguration* is then encapsulated in an nr-SecondaryCellGroupConfig to be included in an RRCConnectionReconfiguration** in LTE format. Upon reception of that RRCConnectionReconfiguration** in LTE format the UE detects the inclusion of the nr-SecondaryCellGroupConfig and applies the RRCReconfiguration* that is encapsulated, and as part of the procedure creates an RRCReconfigurationComplete* message (in response to the RRCReconfiguration*). The UE then responds the MN with an RRCConnectionReconfigurationComplete** message, including inside the RRCReconfigurationComplete* message generated in response to the RRCReconfiguration* as a way to acknowledge the reception of the SN message with CPC configuration. At this procedure the UE starts monitoring CPC execution conditions.

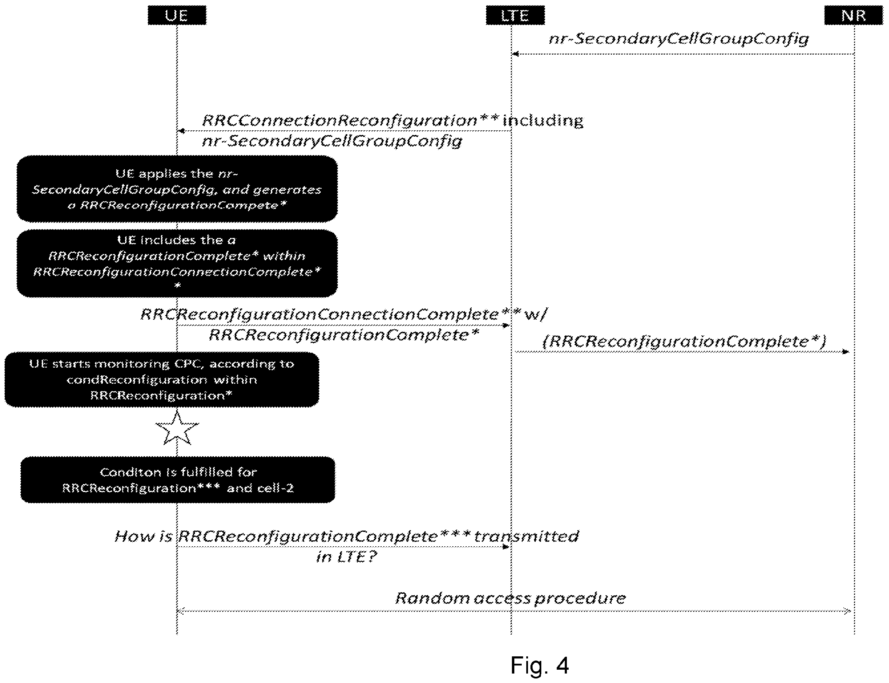

When an execution condition associated to a target candidate for CPC is fulfilled, the UE applies RRCReconfiguration*** message in NR format. As part of that procedure the UE generates an RRCReconfigurationComplete*** (that needs to be transmitted to LTE) according to the agreements and perform random access with the target candidate cell (which is in the target SN (T-SN) illustrated below simply as NR). However, that message RRCReconfigurationComplete*** is in NR format and cannot be transmitted to LTE (or any other RAT in more general terms). This problem is illustrated in **Fig. 4****.**

A second problem embodiments herein concern is the scenario where the UE is operating in MR-DC i.e. having a connection with a Master Node (MN) which may be an NR gNB, and a Secondary Node (SN) which may be an LTE eNB; and, being configured with a Conditional PSCell Change for e.g. an LTE cell. In other words, the UE is monitoring an execution condition for a CPC procedure. In that case, upon the fulfilment of an execution condition the UE applies an RRCConnectionReconfiguration (in LTE format) and generates an RRCConnectionReconfigurationComplete that needs to be transmitted via NR. And, as in the first problem, it is not clear how that message could be transmitted to NR.

A main difference compared to the legacy procedure, i.e. PSCell Change, is that in the legacy procedure the UE receives the NR PSCell Change configuration to be applied (RRCReconfiguration) upon reception embedded within an LTE message (RRCConnectionReconfiguration). Then, upon applying the RRCReconfiguration and generating the RRCReconfigurationComplete in response, there is also the need to generate an RRCConnectionReconfigurationComplete in LTE format for the wrapper message. Hence, the RRCReconfigurationComplete in NR format can be transmitted in the RRCConnectionReconfigurationComplete that is anyway to be transmitted. However, when CPC is executed there is no RRCConnectionReconfigurationComplete to be transmitted, resulting in that communication may be interrupted or delayed, thereby, limiting or reducing the performance of the wireless communication network.

An object of embodiments herein is to provide a mechanism that improves performance in the wireless communication network.

According to embodiments herein the object is achieved by methods claimed herein.

According to an aspect the object is achieved by providing a method performed by a UE for handling cell change of a secondary cell for the UE. The UE receives from a master node, a message of a first RAT comprising a reconfiguration message for a conditional reconfiguration of the secondary cell of a second RAT. The UE transmits to the master node, a first complete message of the second RAT embedded in another message of the first RAT, wherein the first complete message indicates that the UE is able to comply to the conditional reconfiguration. The UE further transmits to the master node, upon fulfilment of a condition of the conditional reconfiguration, a second complete message of the second RAT embedded in a RRC message of the first RAT.

According to another aspect the object is achieved by providing a method performed a master node for handling cell change of a secondary cell for a UE. The master node transmits to the UE, a message of a first RAT comprising a reconfiguration message for a conditional reconfiguration of the secondary cell of a second RAT. The master node further receives from the UE, a first complete message of the second RAT embedded in another message of the first RAT, wherein the first complete message indicates that the UE is able to comply to the conditional reconfiguration; and transmits the first complete message to the secondary node. The master node further receives from the UE, a second complete message, indicating a condition fulfilled at the UE, of the second RAT embedded in a RRC message of the first RAT; and transmits the second complete message to the secondary node.

According to yet another aspect the object is achieved by providing a method performed a secondary node for handling cell change of a secondary cell for a UE. The secondary node transmits to a master node, a reconfiguration message for a conditional reconfiguration of the secondary cell of a second RAT; and receives from the master node, a first complete message of the second RAT, wherein the first complete message indicates that the UE is able to comply to the conditional reconfiguration; and further receives from the master node, a second complete message of the second RAT indicating a condition fulfilled at the UE.

It is furthermore provided herein a computer program product comprising instructions, which, when executed on at least one processor, cause the at least one processor to carry out any of the methods above, as performed by the master node, the secondary node or the UE, respectively. It is additionally provided herein a computer-readable storage medium, having stored thereon a computer program product comprising instructions which, when executed on at least one processor, cause the at least one processor to carry out the method according to any of the methods above, as performed by the master node, the secondary node, or the UE, respectively.

According to yet another aspect the object is achieved by providing a master or a secondary node configured to perform the methods in the network.

According to still another aspect the object is achieved by providing a UE configured to perform the methods by the UE.

According to yet still another aspect the object is achieved by providing a UE for handling cell change of a secondary cell for the UE. The UE is configured to receive from a master node, a message of a first RAT comprising a reconfiguration message for a conditional reconfiguraiton of the secondary cell of a second RAT, and to transmit to the master node, a first complete message of the second RAT embedded in another message of the first RAT, wherein the first complete message indicates that the UE is able to comply to the conditional reconfiguration. The UE is configured to, upon fulfilment of a condition of the conditional reconfiguration, transmit to the master node, a second complete message of the second RAT embedded in a RRC message of the first RAT.

According to yet still another aspect the object is achieved by providing a master node for handling cell change of a secondary cell for a UE. The master node is configured to transmit to the UE, a message of a first RAT comprising a reconfiguration message for a conditional reconfiguration of the secondary cell of a second RAT. The master node is further configured to receive from the UE, a first complete message of the second RAT embedded in another message of the first RAT, wherein the first complete message indicates that the UE is able to comply to the conditional reconfiguration. The master node is configured to transmit the first complete message to the secondary node; to receive from the UE, a second complete message, indicating a condition fulfilled at the UE, of the second RAT embedded in a RRC message of the first RAT; and to transmit the second complete message to the secondary node.

According to yet still another aspect the object is achieved by providing a secondary node for handling cell change of a secondary cell for a UE. The secondary node is configured to transmit to a master node, a reconfiguration message for a conditional reconfiguration of the secondary cell of a second RAT; and to receive from the master node, a first complete message of the second RAT, wherein the first complete message indicates that the UE is able to comply to the conditional reconfiguration. The secondary node is further configured to receive from the master node a second complete message of the second RAT indicating a condition fulfilled at the UE.

Embodiments herein relate to methods and nodes for enabling secondary cell change.

The methods enable the transmission of a complete message in NR format (e.g. *RRCConnectionReconfiguration*) via LTE upon the execution of Conditional PSCell Change procedure i.e. in response to applying an *RRCReconfiguration* message. Thanks to the method it is possible to transmit an NR complete message via LTE without necessarily having to transmit an LTE complete message, which is not possible since that would require the UE to first apply an RRCConnectionReconfiguration message in LTE format, which does not happen in Conditional PSCell Change (CPC). That is different from legacy PSCell Change where the UE actually receives an *RRCConnectionReconfiguration* in LTE format which anyways require the transmission of an *RRCConnectionReconfigurationComplete* also in LTE format. Hence, that is not an issue in legacy PSCell Change when only SRB1 is configured via LTE and the UE operates in EN-DC.

However, in Conditional PSCell Change the UE receives an *RRCConnectionReconfiguration* in LTE format which requires the transmission of an *RRCConnectionReconfigurationComplete* including a first *RRCReconfigurationComplete* in NR format, but a second *RRCReconfigurationComplete* in NR format needs to be transmitted upon execution and without the method there is no way to transmit that over LTE since the network would not expect any complete message in LTE format any longer. Thanks to the method the UE transmits the NR complete message in an UL procedure via SRB1 using a message defined in LTE format that does not require a first configuration message to be transmitted.

Thus, embodiments herein improve performance in the wireless communication network.

### BRIEF DESCRIPTION OF THE DRAWINGS

Embodiments will now be described in more detail in relation to the enclosed drawings, in which:
- Figs. 1-4: are illustrations according to prior art;
- Fig. 5: is a schematic overview depicting a communication network according to embodiments herein;
- Fig. 6: shows a combined signalling scheme and flow chart according to embodiments herein;
- Fig. 7: shows a flow chart depicting a method performed by a UE according to embodiments herein;
- Fig. 8: shows a flow chart depicting a method performed by a MN according to embodiments herein;
- Fig. 9: shows a flow chart depicting a method performed by a SN according to embodiments herein;
- Fig. 10: shows a combined signalling scheme and flow chart according to embodiments herein;
- Fig. 11: shows signalling scheme of an RRC message;
- Fig. 12: shows signalling scheme of a reconfiguration in LTE;
- Fig. 13: shows signalling scheme of a reconfiguration in NR;
- Fig. 14: shows a block diagram depicting MNs according to embodiments herein;
- Fig. 15: shows a block diagram depicting SNs according to embodiments herein;
- Fig. 16: shows a block diagram depicting UEs according to embodiments herein;
- Fig. 17: schematically illustrates a telecommunication network connected via an intermediate network to a host computer;
- Fig. 18: is a generalized block diagram of a host computer communicating via a base station with a user equipment over a partially wireless connection; and
- Figs. 19-22: are flowcharts illustrating methods implemented in a communication system including a host computer, a base station and a user equipment.

### DETAILED DESCRIPTION

Embodiments herein are described in the context of 5G/NR and LTE but the same concept can also be applied to other wireless communication system such as 4G/LTE and UMTS. Embodiments herein may be described within the context of 3GPP NR radio technology (3GPP TS 38.300 V15.2.0 (2018-06)), e.g. using gNB as the radio network node. It is understood, that the problems and solutions described herein are equally applicable to wireless access networks and user-equipments (UEs) implementing other access technologies and standards. NR is used as an example technology where embodiments are suitable, and using NR in the description therefore is particularly useful for understanding the problem and solutions solving the problem. In particular, embodiments are applicable also to 3GPP LTE, or 3GPP LTE and NR integration, also denoted as non-standalone NR.

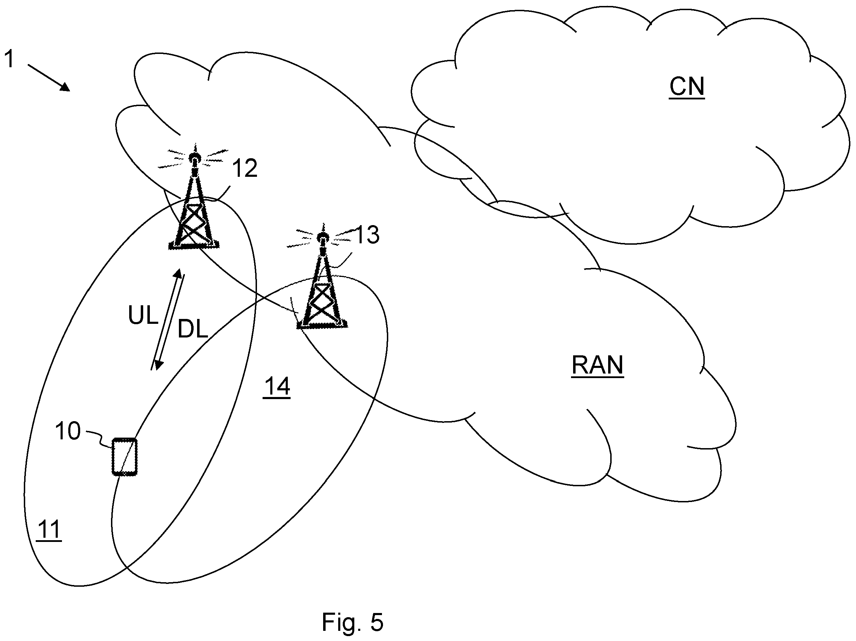

Embodiments herein relate to wireless communication networks in general. **Fig. 5** is a schematic overview depicting **a wireless communication network 1**. The wireless communication network 1 comprises e.g. one or more RANs and one or more CNs. The wireless communication network 1 may use one or a number of different technologies, such as Wi-Fi, Long Term Evolution (LTE), LTE-Advanced, NR, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in 5G systems integrated with LTE systems, however, embodiments are also applicable in further development of the existing communication systems such as e.g. a WCDMA or a LTE system.

In the wireless communication network 1, wireless devices e.g. **a UE 10** such as a mobile station, a non-access point (non-AP) station (STA), a STA, a user equipment and/or a wireless terminal, communicate via one or more Access Networks (AN), e.g. RAN, to one or more core networks (CN). It should be understood by the skilled in the art that "UE" is a non-limiting term which means any terminal, wireless communication terminal, user equipment, Machine Type Communication (MTC) device, Device to Device (D2D) terminal, internet of things (IoT) operable device, or node e.g. smart phone, laptop, mobile phone, sensor, relay, mobile tablets or even a small base station capable of communicating using radio communication with a network node within an area served by the network node.

The communication network 1 comprises **a first radio network node 12** providing e.g. radio coverage over a geographical area, **a first service area 11** i.e. a first cell, of a first radio access technology (RAT), such as NR, LTE, Wi-Fi, WiMAX or similar. The first radio network node 12 may be a transmission and reception point, a computational server, a base station e.g. a network node such as a base station, a Wireless Local Area Network (WLAN) access point or an Access Point Station (AP STA), an access node, an access controller, a radio base station such as a NodeB, an evolved Node B (eNB, eNodeB), a gNodeB (gNB), a base transceiver station, a baseband unit, an Access Point Base Station, a base station router, a transmission arrangement of a radio base station, a stand-alone access point or any other network unit or node depending e.g. on the radio access technology and terminology used. The first radio network node 12 may alternatively or additionally be a controller node or a packet processing node or similar. The first radio network node 12 may be referred to as master node, source access node or a serving network node wherein the first service area 11 may be referred to as a serving cell, source cell or primary cell, and the first radio network node communicates with the UE 10 in form of DL transmissions to the UE 10 and UL transmissions from the UE 10. The first radio network node may be a distributed node comprising a baseband unit and one or more remote radio units.

The communication network 1 comprises **a second radio network node 13** providing e.g. radio coverage over a geographical area, **a second service area 14** i.e. a second cell, of a second radio access technology (RAT), such as NR, LTE, Wi-Fi, WiMAX or similar. The second radio network node 13 may be a transmission and reception point, a computational server, a base station e.g. a network node such as a base station, a Wireless Local Area Network (WLAN) access point or an Access Point Station (AP STA), an access node, an access controller, a radio base station such as a NodeB, an evolved Node B (eNB, eNodeB), a gNodeB (gNB), a base transceiver station, a baseband unit, an Access Point Base Station, a base station router, a transmission arrangement of a radio base station, a stand-alone access point or any other network unit or node depending e.g. on the radio access technology and terminology used. The second radio network node 13 may alternatively or additionally be a controller node or a packet processing node or similar. The second radio network node 13 may be referred to as a secondary node, a target access node or a target network node wherein the second service area 14 may be referred to as a target cell or secondary cell, and the second radio network node 13 communicates with the UE 10 in form of DL transmissions to the UE 10 and UL transmissions from the UE 10. The second radio network node may be a distributed node comprising a baseband unit and one or more remote radio units. The first RAT is different than the second RAT.

It should be noted that a service area may be denoted as cell, beam, beam group or similar to define an area of radio coverage. It should further be noted that the first and second cell may be provided by the same first radio network node 12.

Embodiments herein relate to a solution where the UE 10 is operating in dual connectivity wherein the UE 10 has a connection to a master node, i.e. the first radio network node 12 of the first RAT, and a connection to a secondary node, i.e. the second radio network node 13 of the second RAT. The second radio network node 13 transmits via the first radio network node 12 a reconfiguration message for a conditional reconfiguration of the secondary cell to the UE 10. Since the first radio network node 12 is of a different RAT than the second radio network node 13, the UE 10 receives the reconfiguration message for the conditional reconfiguration of the secondary cell of the second RAT embedded in a message of the first RAT. The UE 10 then transmits a first complete message of the second RAT embedded in another message of the first RAT, wherein the first complete message indicates that the UE is able to comply to the conditional reconfiguration. That is, the first complete message is sent in response to the received conditional reconfiguration.

The UE may then apply the conditional reconfiguration and monitor one or more conditions of the conditional reconfiguration. Upon fulfilment of a condition of the conditional reconfiguration, the UE 10 then transmits to the first radio network node 12 a second complete message of the second RAT embedded in a radio resource control (RRC) message of the first RAT. The first radio network node 12 then unwraps the RRC message and forwards the second complete message to the second radio network node 13. Thus, embodiments herein enable, in a dual connectivity scenario of different RATs, a change of secondary nodes improving the performance of the wireless communication network.

In the document the term LTE for the first RAT or the second RAT is equivalent to the term E-UTRA MCG.

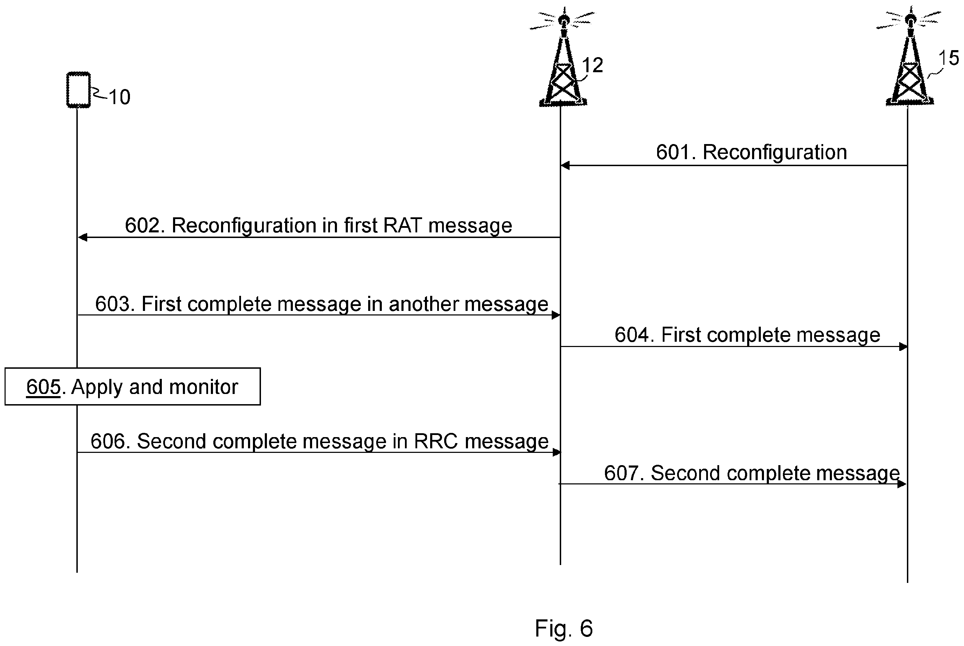

**Fig. 6** is combined flowchart and signalling scheme depicting embodiment herein. The UE may have a connection to the master node 12 of the first RAT, and a connection to the secondary node 13 of the second RAT.

**Action 601.** The secondary node 13 transmits to the master node 12 a reconfiguration message for a conditional reconfiguration of the secondary cell of the second RAT. A condition may be included in the RRCReconfiguration message or RRCconnectionreconfiguration generated by the SN 13 for intra-SN conditional PSCell change initiated by the SN 13.

**Action 602.** The master node 12 transmits to the UE 10 the reconfiguration message embedded in a message of the first RAT.

**Action 603.** The UE 10 transmits a first complete message of the second RAT embedded in another message of the first RAT, wherein the first complete message indicates that the UE 10 is able to comply to the conditional reconfiguration.

**Action 604.** The master node 12 transmits the first complete message to the secondary node 13.

**Action 605.** The UE 10 monitors a condition of the conditional reconfiguration.

**Action 606.** The UE 10, upon fulfilment of the condition of the conditional reconfiguration, transmits a second complete message of the second RAT embedded in an RRC message of the first RAT.

**Action 607.** The master node then transmits the second complete message to the secondary node 13.

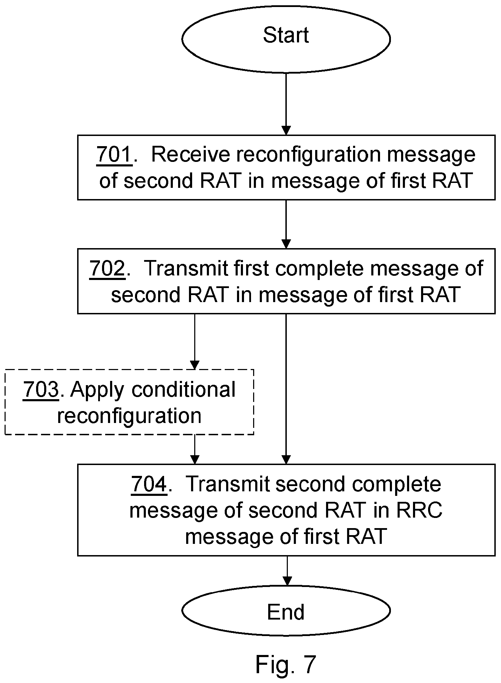

The method actions in the UE 10 for handling cell change of a secondary cell for the UE in the wireless communications network according to embodiments herein will now be described with reference to a flowchart depicted in **Fig. 7****.** The actions do not have to be taken in the order stated below, but may be taken in any suitable order. Actions performed in some embodiments are marked with dashed boxes. The UE 10 may have a connection to the master node 12 of the first RAT, and a connection to the secondary node 13 of the second RAT.

**Action 701.** The UE 10 receives from the master node 12, the message of the first RAT comprising the reconfiguration message for a conditional reconfiguration of the secondary cell of the second RAT. For example, reconfiguration of the secondary cell embedded in a first reconfiguration message of the first RAT.

The first RAT may be LTE and the second RAT may be NR. When the first RAT is LTE and the second RAT is NR, the reconfiguration message may be a RRCreconfiguration message and the message of the first RAT may be a RRCConnectionReconfiguration message.

The first RAT may be NR, and the second RAT may be LTE. When the first RAT is NR and the second RAT is LTE, the reconfiguration message may be a RRCconnectionreconfiguration message and the message of the first RAT may be a RRCreconfiguration message.

**Action 702.** The UE 10 transmits to the master node 12, the first complete message of the second RAT embedded in another message of the first RAT, wherein the first complete message indicates that the UE is able to comply to the conditional reconfiguration.

When the first RAT is LTE and the second RAT is NR, the first complete message of the second RAT may be a RRCreconfiguration complete message and the other message of the first RAT may be a RRCConnectionReconfiguration complete message.

When the first RAT is NR and the second RAT is LTE, the first complete message of the second RAT may be a RRCConnectionReconfiguration complete message and the other message of the first RAT is a RRCreconfiguration complete message.

**Action 703.** The UE 10 may apply the conditional reconfiguration, performing an action according to the conditional reconfiguration. E.g. monitor one or more signals and compare with a condition such as signal strength threshold or the like.

**Action 704.** The UE 10, upon fulfilment of a condition of the conditional reconfiguration, transmits to the master node 12, the second complete message of the second RAT embedded in a RRC message of the first RAT. The second complete message may be transmitted over a signalling radio bearer one, SRB1. The RRC message of the first RAT may be a ULInformationTransferMRDC message.

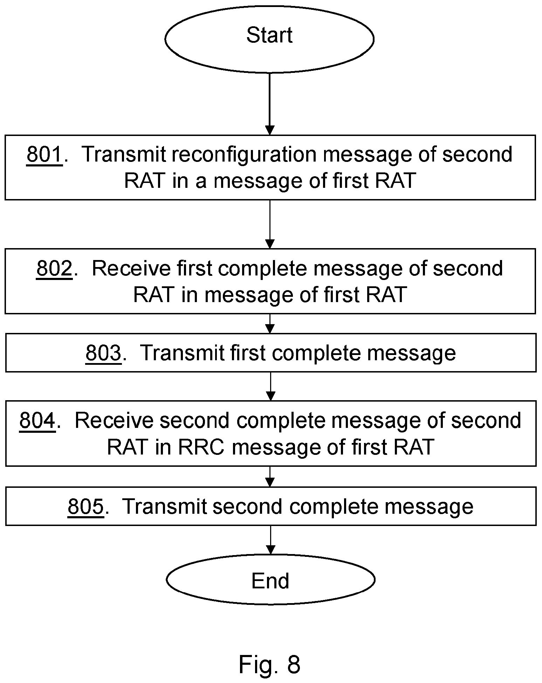

The method actions performed by the master node 12 for handling cell change of the secondary cell for the UE in the wireless communications network according to embodiments herein will now be described with reference to a flowchart depicted in **Fig. 8****.** The actions do not have to be taken in the order stated below, but may be taken in any suitable order.

**Action 801.** The master node 12 transmits to the UE 10, the message of the first RAT comprising the reconfiguration message for conditional reconfiguration of the secondary cell of the second RAT.

The first RAT may be LTE and the second RAT may be NR. When the first RAT is LTE and the second RAT is NR, the reconfiguration message may be a RRCreconfiguration message and the message of the first RAT may be a RRCConnectionReconfiguration message.

The first RAT may be NR, and the second RAT may be LTE. When the first RAT is NR and the second RAT is LTE, the reconfiguration message may be a RRCconnectionreconfiguration message and the message of the first RAT may be a RRCreconfiguration message.

**Action 802.** The master node 12 further receives from the UE, the first complete message of the second RAT embedded in the other message of the first RAT, wherein the first complete message indicates that the UE is able to comply to the conditional reconfiguration.

When the first RAT is LTE and the second RAT is NR, the first complete message of the second RAT may be a RRCreconfiguration complete message and the other message of the first RAT may be a RRCConnectionReconfiguration complete message.

When the first RAT is NR and the second RAT is LTE, the first complete message of the second RAT may be a RRCConnectionReconfiguration complete message and the other message of the first RAT is a RRCreconfiguration complete message.

**Action 803.** The master node 12 transmits the first complete message to the secondary node.

**Action 804.** The master node 12 receives from the UE, the second complete message, indicating the condition fulfilled at the UE, of the second RAT embedded in the RRC message of the first RAT. The second complete message may be received over a SRB1. The RRC message of the first RAT may be a ULInformationTransferMRDC message.

**Action 805.** The master node 12 then transmits the second complete message to the secondary node.

The method actions performed by the secondary node 13 for handling cell change of the secondary cell for the UE in the wireless communications network according to embodiments herein will now be described with reference to a flowchart depicted in **Fig. 9****.** The actions do not have to be taken in the order stated below, but may be taken in any suitable order.

**Action 901.** The secondary node 13 transmits to the master node 12, the reconfiguration message for the conditional reconfiguration of the secondary cell of the second RAT.

The first RAT may be LTE and the second RAT may be NR. When the first RAT is LTE and the second RAT is NR, the reconfiguration message may be a RRCreconfiguration message.

The first RAT may be NR, and the second RAT may be LTE. When the first RAT is NR and the second RAT is LTE, the reconfiguration message may be a RRCconnectionreconfiguration message.

**Action 902.** The secondary node 13 receives from the master node, the first complete message of the second RAT, wherein the first complete message indicates that the UE is able to comply to the conditional reconfiguration.

When the first RAT is LTE and the second RAT is NR, the first complete message of the second RAT may be a RRCreconfiguration complete message.

When the first RAT is NR and the second RAT is LTE, the first complete message of the second RAT may be a RRCConnectionReconfiguration complete message.

**Action 903.** The secondary node 13 receives from the master node, the second complete message, indicating a condition fulfilled at the UE, of the second RAT.

The document refers to a CPC configuration and procedures (like CPC execution). However, other terms may be considered as synonyms such as Conditional Reconfiguration, or Conditional Configuration (since the message that is stored and applied upon fulfilment of a condition is an RRCReconfiguration or RRCConnectionReconfiguration). Terminology-wise, one could also interpret conditional handover (CHO) in a broader sense, also covering CPC procedures.

So far, the configuration of CPC is done using the same lEs as conditional handover, which may be called at some point conditional configuration or conditional reconfiguration. The principle for the configuration is the same with configuring triggering/execution condition(s) and a reconfiguration message to be applied when the triggering condition(s) are fulfilled. The configuration lEs from TS 38.331:

### ConditionalReconfiguration

The IE *ConditionalReconfiguration* is used to add, modify and release the configuration of conditional configuration.

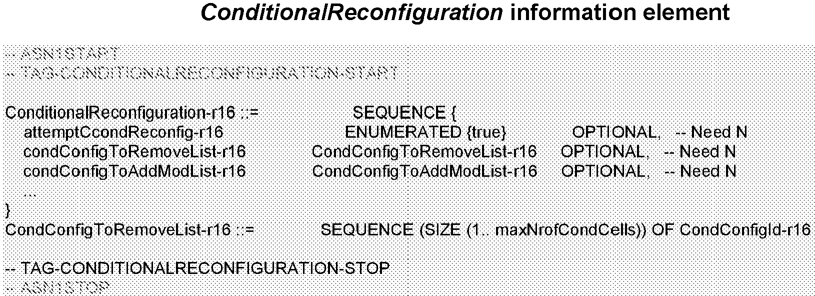

| ***ConditionalReconfiguration* field descriptions** |
|---|
| ***condConfigToAddModList*** |
| List of the configuration of candidate SpCells to be added or modified for CHO or CPC. |

| *condConfigToRemoveList* |
|---|
| List of the configuration of candidate SpCells to be removed. When the network removes the stored conditional configuration for a candidate cell, the network releases the measIDs associated to the *condExecutionCond* if it is not used by the *condExecutionCond* of other candidate cells. |

### CondConfigld

The IE *CondConfigId* is used to identify a CHO or CPC configuration.

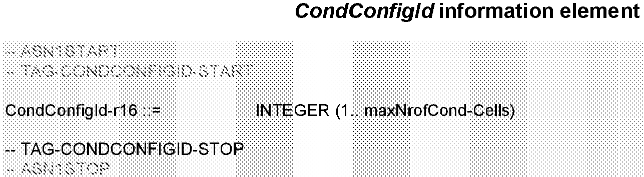

### CondConfi gToAddM od List

The IE *CHO-ConfigToAddModList* concerns a list of conditional configurations to add or modify, with for each entry the *cho-ConfigId* and the associated *condExecutionCond* and *condRRCReconfig.*

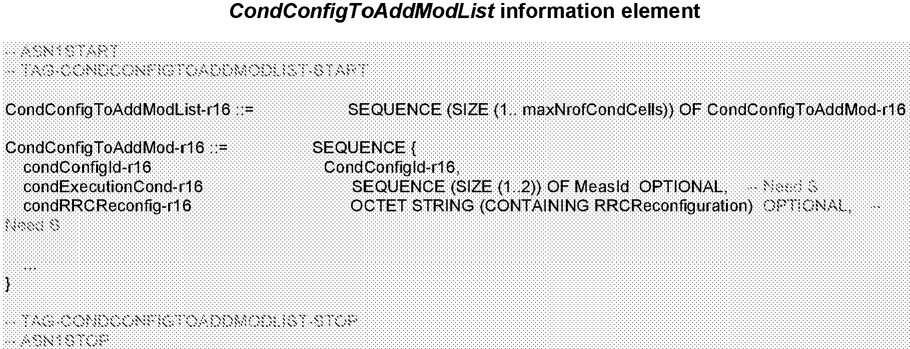

| ***CondConfigToAddMod* field descriptions** |
|---|
| ***condExecutionCond*** |
| The execution condition that needs to be fulfilled in order to trigger the execution of a conditional configuration The field is mandatory present when a *condConfigld* is being added. Otherwise, when the *condRRCReconfig* associated to a *condConfigld* is being modified it is optionally present and the UE uses the stored value if the field is absent. |

| ***condRRCReconfig*** |
|---|
| The *RRCReconfiguration* message to be applied when the condition(s) are fulfilled. The field is mandatory present when a *condConfigld* is being added. Otherwise, when the *condExecutionCond* associated to a *condConfigId* is being modified it is optionally present and the UE uses the stored value if the field is absent. |

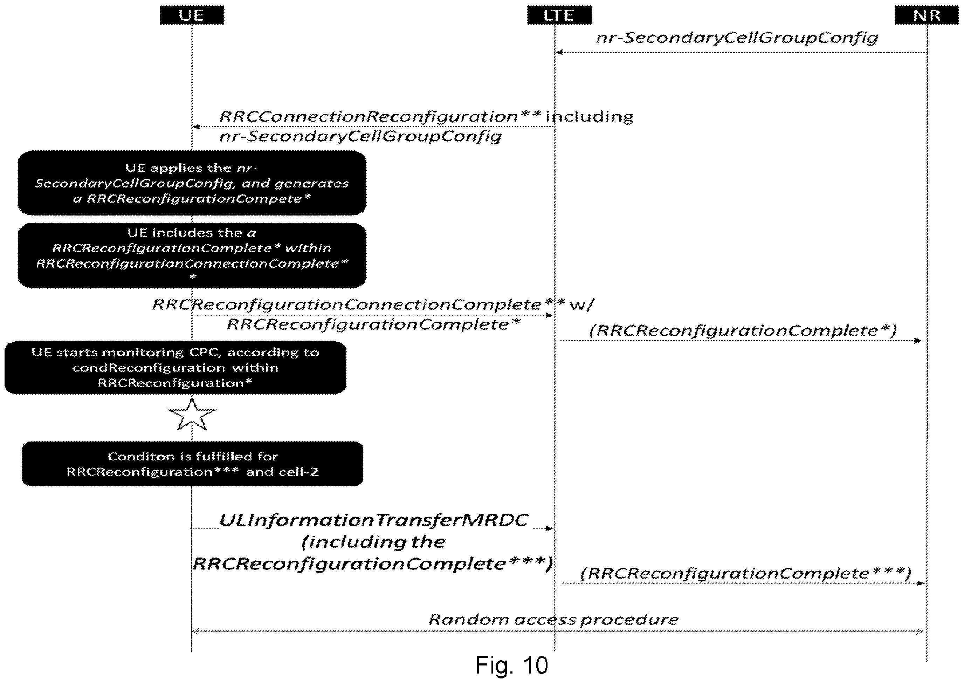

**Fig. 10** is combined flowchart and signalling scheme depicting embodiment herein, wherein the UE is in MR-DC with MN LTE and SN NR.

The SN 13 transmits NR-SCG configuration to the MN 12. The MN 12 transmits the LTE message for reconfiguration to the UE, for example, transmits RRCConnectionReconfiguration** including the NR-SCG configuration. The UE applies the NR-SCG configuration and generates a RRCReconfiguration complete*. The UE 10 includes the RRCReconfigurationComplete* within the RRCReconfigruationConnectionComplete**. The UE transmits the RRCConnectionReconfigurationComplete** with the RRCReconfiguration complete* to the MN 12. The MN 12 transmits the RRCReconfigurationComplete* to the SN 13.

The UE 10 may then start monitoring CPC conditions according to the conditionReconfiguration within the RRCReconfiguration*. A condition in the NR-SCG configuration may then be fulfilled for RRCReconfiguration** and e.g. a second cell such as cell-2. The UE 10 may then transmit an ULInformationTransferMRDC message including the RRCReconfigurationcomplete*** to the MN 12. The MN 12 transmits RRCReconfigurationcomplete*** to the SN 13 and a random access procedure may be initiated.

It is herein disclosed a method in a wireless terminal (also called a User Equipment - UE) for conditional reconfiguration (e.g. Conditional PSCell Change (CPC) execution) the method comprising:
- Receiving a, e.g. a first RAT, LTE, message including a second RAT, NR, SCG configuration; AND Applying the NR SCG configuration; AND
- Upon fulfilment of execution condition(s) of Conditional PSCell Change (CPC) while in MR-DC whose **MN is of the first RAT (e.g. LTE)** and **SN is of the second RAT (e.g. NR)**:
   ∘ *Applying* the stored *RRCReconfiguration* message (e.g. in NR format) associated to the fulfilled execution condition(s);
      ▪ Upon applying the stored RRCReconfiguration, performing the action according to the reception of an RRCReconfiguration;
   ∘ *Setting* the content of an *RRCReconfigurationComplete* message;
   ∘ *Submitting* the content of an *RRCReconfigurationComplete* message according to at least one of the following:
      ▪ Submitting the *RRCReconfigurationComplete* message via the E-UTRA MCG i.e. LTE message;
      ▪ Submitting the *RRCReconfigurationComplete* message embedded in an E-UTRA RRC message;
         - In one embodiment the E-UTRA RRC message is an *ULInformationTransferMRDC* as specified in TS 36.331;
         - In another embodiment the E-UTRA RRC message is an *RRCConnectionReconfigurationComplete* as specified in TS 36.331, but not necessarily transmitted in response to an *RRCConnection Reconfiguration;*
         - In another embodiment the E-UTRA RRC message is an *RRCUEAssistanceInformation* as specified in TS 36.331;
      ▪ Submitting the *RRCReconfigurationComplete* message using an E-UTRA RRC procedure;
         - In one embodiment the E-UTRA RRC procedure is an UL information transfer for MR-DC as specified in TS 36.331 (e.g. in 5.6.2a).
         - In another embodiment the E-UTRA RRC procedure is a transmission of complete message of NR (possibly new procedure defined for that purpose).
         - In another embodiment the E-UTRA RRC procedure is a transmission of UE assistance information as specified in TS 36.331.

Additionally or alternatively, the UE submits the *RRCReconfigurationComplete* as described above if at least one of the conditions (or combination) occurs:
- if the applied *RRCReconfiguration* message was received via SRB1;
- if the applied *RRCReconfiguration* message was received via LTE (e.g. E-UTRAN).

Additionally or alternatively, the UE submits the RRCReconfigurationComplete to lower layers for transmission via SRB1 if at least one of the conditions (or combination) occurs:
- if the applied *RRCReconfiguration* message was received via SRB1;
- if the applied RRCReconfiguration message was NOT received via LTE (e.g. E-UTRAN).

Network embodiments are provided in the detailed description for this main use case wherein the UE is in EN-DC, i.e., MN LTE and SN NR.

UE and network embodiments are also provided herein for another use case (UE in MR-DC, i.e., MN NR and SN LTE).

Thus, a use case may be UE in EN-DC where MN LTE and SN NR as disclosed in Fig. 10, but embodiments herein also cover where the UE 10 is in MR-DC with MN NR and SN LTE. It is herein disclosed a method performed by a wireless terminal (also called a User Equipment - UE) for conditional reconfiguration execution (e.g. Conditional PSCell Change (CPC) execution) the method comprising:
- 1/ Receiving an LTE message including an NR SCG configuration; AND
   ∘ In one embodiment the LTE message is an *RRCConnectionReconfiguration*;
   ∘ In one embodiment the NR SCG configuration is included in the field *nr-SecondaryCellGroupConfig* of an OCTET STRING as an *RRCReconfiguration* in NR format;
   ∘ In one embodiment the *RRCReconfiguration* in NR format contain a CPC configuration, comprising for each target candidate execution condition(s) configuration to be monitored (e.g. like an A3 and/or A5 event) and an *RRCReconfiguration* to be applied upon fulfilment of execution condition(s);
- 2/ Applying the NR SCG configuration; AND
   ∘ In one embodiment the UE applies an *RRCReconfiguration* in NR format containing CPC configuration(s), and start monitoring conditional reconfiguration i.e. it starts to monitor the execution condition(s) (e.g. like an A3 and/or A5 event);
- 3/ Upon fulfilment of execution condition(s) of Conditional PSCell Change (CPC) while in MR-DC whose **MN is of a first RAT (e.g. LTE)** and **SN is of a second RAT (e.g. NR):**
   ∘ *Applying* the stored *RRCReconfiguration* message (e.g. in NR format) associated to the fulfilled execution condition(s);
      ▪ Upon applying the stored RRCReconfiguration, performing the action according to the reception of an RRCReconfiguration;
   ∘ *Setting* the content of an *RRCReconfigurationComplete* message;
   ∘ *Submitting* the content of an *RRCReconfigurationComplete* message according to at least one of the following:
      ▪ Submitting the *RRCReconfigurationComplete* message via the E-UTRA MCG;
      ▪ Submitting the *RRCReconfigurationComplete* message embedded in an E-UTRA RRC message;
      ▪ Submitting the *RRCReconfigurationComplete* message using an E-UTRA RRC procedure;

Additionally or alternatively, the UE submits the *RRCReconfigurationComplete* as described above in the claim if at least one of the conditions (or combination) occurs:
- if the applied *RRCReconfiguration* message was received via SRB1;
- if the applied *RRCReconfiguration* message was received via LTE (e.g. E-UTRAN).

Additionally or alternatively, the UE submits the RRCReconfigurationComplete to lower layers for transmission via SRB1 if at least one of the conditions (or combination) occurs:
- if the applied *RRCReconfiguration* message was received via SRB1;
- if the applied RRCReconfiguration message was NOT received via LTE (e.g. E-UTRAN).

### Example implementation in RRC specifications of NR (TS 38.331) and LTE (TS 36.331) for step 3/

### [TS 38.331]

### 5.3.5.x.5 Conditional configuration execution

The UE shall:
1> if more than one triggered cell exists:
   2> select one of the triggered cells as the selected cell for conditional configuration execution;
1> for the selected cell of conditional configuration execution:
   **2> apply the stored *condRRCReconfig* of the selected cell and perform the actions as specified in 5.3.5.3;**

NOTE: If multiple NR cells are triggered in conditional configuration execution, it is up to UE implementation which one to select, e.g. the UE considers beams and beam quality to select one of the triggered cells for execution.

### [TS 38.331]

### 5.3.5.3 Reception of an RRCReconfiguration by the UE

The UE shall perform the following actions upon reception of the *RRCReconfiguration,* or upon execution of the conditional configuration (CHO or CPC):
[...]
1> set the content of the *RRCReconfigurationComplete* message as follows:
[...]
2> if the *RRCReconfiguration* is applied due to a conditional reconfiguration execution and includes a *secondaryCellGroup*:
3> if the applied *RRCReconfiguration* message was received via SRB1:
4> if the applied *RRCReconfiguration* message was received via E-UTRAN:
   5> **submit the *RRCReconfigurationComplete* message via the E-UTRA MCG embedded in E-UTRA RRC message *ULInformationTransferMRDC* as specified in TS 36.331 [10].**
4> else:
   5> submit the *RRCReconfigurationComplete* to lower layers for transmission via SRB1;

### [TS 36.331]

### 5.6.2a UL information transfer for MR-DC

### 5.6.2a.1 General

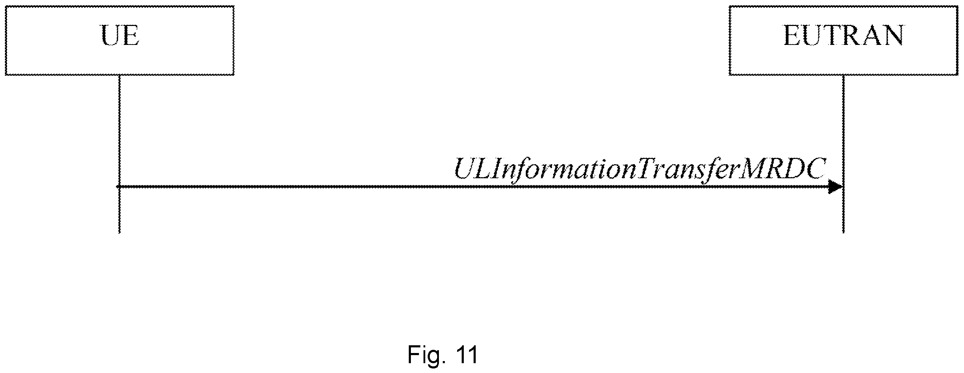

### Figure 11 or 5.6.2a.1-1: UL information transfer MR-DC

The purpose of this procedure is to transfer from the UE to E-UTRAN MR-DC dedicated information e.g. the NR RRC Measurement Report message **or an NR *RRCReconfigurationComplete* (to be transmitted upon the CPC execution if only SRB1 is configured and the UE is operating in EN-DC).**

### 5.6.2a.2 Initiation

A UE in RRC_CONNECTED initiates the UL information transfer procedure whenever there is a need to transfer MR DC dedicated information as specified in TS 38.331 [82]. I.e. the procedure is not used during an RRC connection reconfiguration involving NR connection reconfiguration, in which case the MR DC information is piggybacked to the *RRCConnectionReconfigurationComplete* message, **except in the case the UE executes a Conditional PSCell Change.**

### 5.6.2a.3 Actions related to transmission of ULInformationTransferMRDC message

The UE shall set the contents of the *ULInformationTransferMRDC* message as follows:
1> if there is a need to transfer MR DC dedicated information:
   2> set the *ul-DCCH-MessageNR* to include the MR DC dedicated information to be transferred;
1> submit the *ULInformationTransferMRDC* message to lower layers for transmission, upon which the procedure ends;

### 5.6.2a.4 Void

### Network embodiments (For a UE in MR-DC with MN LTE and SN NR)

It is herein disclosed a method in a **first network node operating as Master Node (MN)** for a UE in MR-DC configured with conditional reconfiguration (e.g. Conditional PSCell Change (CPC) execution) the method comprising:
- Transmitting to the UE an LTE message including an NR SCG configuration; AND
   ∘ In one embodiment the LTE message is an *RRCConnectionReconfiguration*;
   ∘ In one embodiment the NR SCG configuration is included in the field *nr-SecondaryCellGroupConfig* of an OCTET STRING as an *RRCReconfiguration* in NR format;
   ∘ In one embodiment the *RRCReconfiguration* in NR format contain a CPC configuration, comprising for each target candidate an execution condition configuration to be monitored (e.g. like an A3 and/or A5 event) and an *RRCReconfiguration* to be stored by the UE;
   ∘ In one embodiment the *RRCReconfiguration* in NR format is received by a Target Secondary Node (T-SN) and provided to the MN via an SgNB Addition Request Acknowledge like message (e.g. it may be an SgNB Addition Request Acknowledge message including an indication this is about CPC, CHO and/or conditional reconfiguration);
- Receiving from the UE a complete message in LTE format embedded with an NR complete message in NR format;
   ∘ In one embodiment the LTE message is an *RRCConnectionReconfigurationComplete;*
   ∘ In one embodiment the NR message is an *RRCReconfigurationComplete*;
   ∘ In one embodiment the MN informs a Source SN (S-SN) that the UE has been reconfigured, e.g., by transmitting a SgNB Change Confirm like message (e.g. possibly including an additional indication this is about CPC configuration);
      ▪ The Source SN (S-SN) may be the same node as the Target SN or a different node;
   ∘ In one embodiment the MN informs a Source SN (S-SN) that the UE has been reconfigured, e.g., by transmitting a SgNB Reconfiguration Complete like message (e.g. possibly including an additional indication this is about CPC configuration);
      ▪ The Source SN (S-SN) may be the same node as the Target SN or a different node;
- Transmitting the embedded NR complete message in NR format to the SN;
   ∘ In one embodiment the MN transmits to a Source SN (S-SN) the *RRCReconfigurationComplete* that has been transmitted by the UE within the *RRCConnectionReconfigurationComplete;*
      ▪ The Source SN (S-SN) may be the same node as the Target SN or a different node;
- Monitoring transmissions from the UE on SRB1;
- Receiving via SRB1 an E-UTRA RRC message including an embedded NR RRC message using an EUTRA procedure;
   ∘ In one embodiment the E-UTRA RRC message is an ULInformationTransferMRDC message;
   ∘ In one embodiment the E-UTRA RRC procedure is an UL information transfer for MR-DC;
   ∘ In one embodiment the NR RRC procedure is an *RRCReconfigurationComplete,* indicating the execution of a CPC procedure in a NR target candidate cell;
- Transmitting to the Secondary Node the NR RRC message indicating the execution of a CPC procedure in a NR target candidate cell;
   ∘ In one embodiment the MN transmits to a Target SN (T-SN) the *RRCReconfigurationComplete* that has been transmitted by the UE within the *RRCConnectionReconfigurationComplete;*
      ▪ The Source SN (S-SN) may be the same node as the Target SN or a different node;
   ∘ In one embodiment the MN informs a Target SN (T-SN) that the UE has been reconfigured, e.g., by transmitting a SgNB Reconfiguration Complete like message (e.g. possibly including an additional indication this is about CPC configuration, and/or including the NR RRC message indicating the execution of the CPC procedure in a NR target candidate cell like the *RRCReconfiguration Complete);*
      ▪ The Source SN (S-SN) may be the same node as the Target SN or a different node;

### Network embodiments (For a UE in MR-DC with MN LTE and SN NR).

It is herein disclosed a method in a **second network node operating as Secondary Node (SN)** for a UE in MR-DC configured with conditional reconfiguration (e.g. CPC execution) the method comprising:
- Generating an NR SCG configuration; AND
   ∘ In one embodiment the NR SCG configuration is in an *RRCReconfiguration* in NR format;
   ∘ In one embodiment the *RRCReconfiguration* in NR format contain a CPC configuration, comprising for each target candidate an execution condition configuration to be monitored (e.g. like an A3 and/or A5 event) and an *RRCReconfiguration* to be stored by the UE;
- Transmitting the NR SCG configuration to a Master Node;
- Receiving from the MN a first NR complete message in NR format e.g. a first NR *RRCReconfigurationComplete* message;
   ∘ The reception of the message indicates to the SN that the UE has successfully received the message and is able to comply to the CPC configuration, at least the execution condition configuration(s);
- Receiving from the MN a second NR complete message in NR format e.g. a second NR *RRCReconfigurationComplete* message;
   ∘ The reception of the message indicates to the SN that the UE has successfully executed CPC in a target cell candidate;

### Example implementation in RRC specifications of NR (TS 38.331) and LTE (TS 36.331) for steps 1/ and 2/

### [TS 36.331]

### 5.3.5 RRC connection reconfiguration

### 5.3.5.1 General

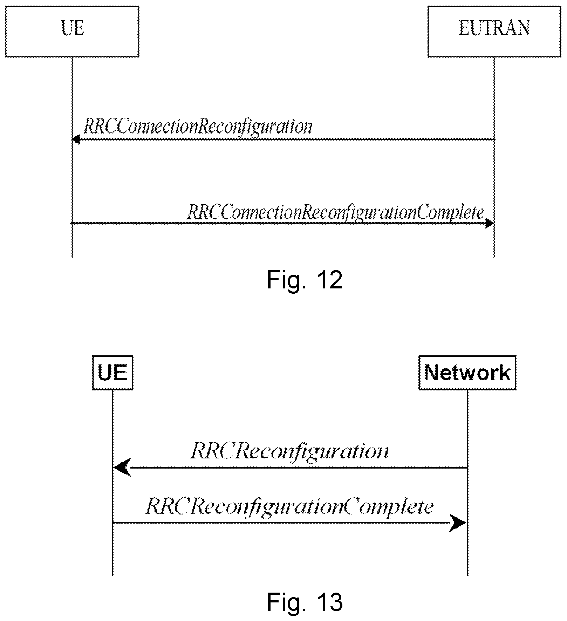

### Figure 12 or 5.3.5.1-1: RRC connection reconfiguration, successful

**[...]**

The purpose of this procedure is to modify an RRC connection, e.g. to establish/ modify/ release RBs, to perform handover, to setup/ modify/ release measurements, to add/ modify/ release SCells. As part of the procedure, NAS dedicated information may be transferred from E-UTRAN to the UE.

### 5.3.5.2 Initiation

E-UTRAN may initiate the RRC connection reconfiguration procedure to a UE in RRC_CONNECTED. E-UTRAN applies the procedure as follows:
- the *mobilityControllnfo* is included only when AS-security has been activated, and SRB2 with at least one DRB are setup and not suspended;
- the establishment of RBs (other than SRB1, that is established during RRC connection establishment) is included only when AS security has been activated;
- the addition of SCells is performed only when AS security has been activated;
- **the addition, release or modification of conditional configurations (conditional handover) is performed only when AS security has been activated, and SRB2 with at least one DRB are setup and not suspended;**

**The UE initiates the RRC connection reconfiguration procedure while in RRC_CONNECTED when a conditional reconfiguration (e.g. CHO) is executed i.e. upon the fulfilment of an execution condition, an associated *RRCConnectionReconfiguration* that is stored is applied.**

### 5.3.5.3 Reception of an RRCConnectionReconfiguration not including the mobilityControllnfo by the UE

If the *RRCConnectionReconfiguration* message does not include the *mobilityControllnfo* and the UE is able to comply with the configuration included in this message, the UE shall:
1> if the received *RRCConnectionReconfiguration* includes the *daps-SourceRelease*:
   [...]
1> if the received *RRCConnectionReconfiguration* includes the *nr-SecondaryCellGroupConfig*:
   2> perform NR RRC Reconfiguration as specified in TS 38.331 [82], clause 5.3.5.3;
   [...]

### [TS 38.331]

### 5.3.5 RRC reconfiguration

### 5.3.5.1 General

### Figure 13 or Fig. 5.3.5.1-1: RRC reconfiguration, successful

**[...]**

### 5.3.5.3 Reception of an RRCReconfiguration by the UE

The UE shall perform the following actions upon reception of the *RRCReconfiguration,* or upon execution of the conditional configuration (CHO or CPC):
[...]
1> if the *RRCReconfiguration* message includes the *conditionalReconfiguration*:
   2> perform conditional configuration as specified in 5.3.5.x;
1> set the content of the *RRCReconfigurationComplete* message as follows:
   [...]
1> if the UE is configured with E-UTRA *nr-SecondaryCellGroupConfig* (MCG is E-UTRA):
   2> if the *RRCReconfiguration* message was received via SRB1:
   3> submit the *RRCReconfigurationComplete* via the E-UTRA MCG embedded in E-UTRA RRC message *RRCConnectionReconfigurationComplete* as specified in TS 36.331 [10];
[...]

### 5.3.5.x Conditional configuration (ConditionalReconfiguration)

### 5.3.5.x.1 General

The network configures the UE with one or more candidate target SpCells in the conditional configuration. The UE evaluates the condition of each configured candidate target SpCell. The UE applies the conditional configuration associated with one of the target SpCells which fulfills associated execution condition. The network provides the configuration parameters for the target SpCell in the *ConditionalReconfiguration*IE.

The UE performs the following actions based on a received *ConditionalReconfiguration*IE:
1> if the *ConditionalReconfiguration*contains the *condConfigToRemoveList*:
   2> perform conditional configuration removal procedure as specified in 5.3.5.x.2;
1> if the *ConditionalReconfiguration* contains the *condConfigAddModList*:
   2> perform conditional configuration addition/modification as specified in 5.3.5.x.3;
[...]

### 5.3.5.x.3 Conditional configuration addition/modification

For each *condConfigld* received in the *condConfigToAddModList* IE the UE shall:
1 > if an entry with the matching *condConfigld* exists in the *condConfigToAddModList* within the *VarConditionalConfig:*
   [...]
1> Else:
   2> add a new entry for this *condConfigld* within the *VarConditionalConfig*;
1> perform conditional configuration evaluation as specified in 5.3.5.x.4;

### 5.3.5.x.4 Conditional configuration evaluation

The UE shall:
1 > for each *condConfigld* within the *VarCondtionalConfig*:
2> consider the cell which has a physical cell identity matching the value indicated in the *ServingCellConfigCommon* included in the reconfigurationWithSync in the received *condRRCReconfig* to be applicable cell;
2> for each *measId* included in the *measIdList* within *VarMeasConfig* indicated in the *condExecutionCond* associated to *condConfigld*:
   3> if the entry condition(s) applicable for this event associated with the *condConfigld,* i.e. the event corresponding with the *condEventld(s)* of the corresponding *condTriggerConfig* within *VarConditionalConfig*, is fulfilled for the applicable cells for all measurements after layer 3 filtering taken during the corresponding *timeToTrigger* defined for this event within the *VarConditionalConfig*:
   4> consider the event associated to that *measId* to be fulfilled;
      3> if the leaving condition(s) applicable for this event associated with the *condConfigld,* i.e. the event corresponding with the *condEventId(s)* of the corresponding *condTriggerConfig* within *VarConditionalConfig,* is fulfilled for the applicable cells for all measurements after layer 3 filtering taken during the corresponding *timeToTrigger* defined for this event within the *VarConditionalConfig*:
   4> consider the event associated to that *measId* to be not fulfilled;
      2> if trigger conditions for all associated measld(s) within *condTriggerConfig* are fulfilled for all associated measld(s) in *condTriggerConfig*:
      3> consider the target candidate cell within the stored *condRRCReconfig*, associated to that *condConfigld,* as a triggered cell;
      3> initiate the conditional configuration execution, as specified in 5.3.5.x.5;

Note : up to 2 *MeasId* can be configured for each *condConfigld.* The conditional handover event of the 2 *MeasId* may have the same or different event conditions, triggering quantity, time to trigger, and triggering threshold.

### [TS 36.331]

### 5.3.5.3 Reception of an RRCConnectionReconfiguration not including the mobilityControllnfo by the UE

If the *RRCConnectionReconfiguration* message does not include the *mobilityControllnfo* and the UE is able to comply with the configuration included in this message, the UE shall:
[...]
1> set the content of *RRCConnectionReconfigurationComplete* message as follows:
   [...]
1> if the UE is configured with NE-DC:
   [...]
1> else:
   2> submit the *RRCConnectionReconfigurationComplete* message to lower layers for transmission using the new configuration, upon which the procedure ends;

### Another use case: UE in MR-DC (MN NR and SN LTE)

UE embodiments (UE in MR-DC with MN NR and SN LTE). It is herein disclosed a method in a wireless terminal (also called a User Equipment - UE) for conditional reconfiguration execution (e.g. CPC execution) the method comprising:
- Receiving an NR message including an LTE SCG configuration; AND
- Applying the LTE SCG configuration; AND
- Upon fulfilment of execution condition(s) of Conditional PSCell Change (CPC) while in MR-DC whose **MN is of a first RAT (e.g. NR)** and **SN is of a second RAT (e.g. LTE):**
   ∘ *Applying* the stored *RRCConnectionReconfiguration* message (e.g. in LTE format) associated to the fulfilled execution condition(s);
      ▪ Upon applying the stored *RRCConnectionReconfiguration,* performing the action according to the reception of an *RRCConnectionReconfiguration;*
   ∘ *Setting* the content of an *RRCConnectionReconfigurationComplete* message;
   ∘ *Submitting* the content of an *RRCConnectionReconfigurationComplete* message according to at least one of the following:
      ▪ Submitting the *RRCConnectionReconfigurationComplete* message via the NR MCG;
      ▪ Submitting the *RRCConnectionReconfigurationComplete* message embedded in an NR RRC message;
      ▪ Submitting the *RRCConnectionReconfigurationComplete* message using an NR RRC procedure;

Additionally or alternatively, the UE submits the *RRCConnectionReconfigurationComplete* as described above if at least one of the conditions (or combination) occurs:
- if the applied *RRCConnectionReconfigurationComplete* message was received via SRB1;
- if the applied *RRCConnectionReconfiguration* message was received via NR (e.g. NR / NG-RAN).

Additionally or alternatively, the UE submits the *RRCConnectionReconfigurationComplete* to lower layers for transmission via SRB1 if at least one of the conditions (or combination) occurs:
- if the applied *RRCConnectionReconfiguration* message was received via SRB1;
- if the applied *RRCConnectionReconfiguration* message was NOT received via NR (e.g. NG-RAN).

### Network embodiments (For a UE in MR-DC with MN NR and SN LTE)

It is herein disclosed a method in a **first network node operating as Master Node (MN)** for a UE in MR-DC configured with conditional reconfiguration (e.g. Conditional PSCell Change - CPC execution) the method comprising:
- Transmitting an NR message including an LTE SCG configuration; AND
   ∘ In one embodiment the NR message is an *RRCReconfiguration*;
   ∘ In one embodiment the LTE SCG configuration is an *RRCConnectionReconfiguration* in LTE format;
   ∘ In one embodiment the *RRCConnectionReconfiguration* in LTE format contain a CPC configuration, comprising for each target candidate an execution condition configuration to be monitored (e.g. like an A3 and/or A5 event) and an *RRCConnectionReconfiguration* to be stored by the UE;
- Receiving a complete message in NR format embedded with an LTE complete message in LTE format;
   ∘ In one embodiment the NR message is an *RRCReconfigurationComplete*;
   ∘ In one embodiment the LTE message is an *RRCConnectionReconfigurationComplete;*
- Transmitting the embedded LTE complete message in LTE format to the SN;
- Monitoring transmissions from the UE on SRB1;
- Receiving via SRB1 an NR RRC message including an embedded LTE RRC message using an NR procedure;
   ∘ In one embodiment the NR RRC message is an ULInformationTransferMRDC message;
   ∘ In one embodiment the NR RRC procedure is an UL information transfer for MR-DC;
- Transmitting to the Secondary Node the LTE RRC message indicating the execution of a CPC procedure in a LTE target candidate cell;

### Network embodiments (For a UE in MR-DC with MN LTE and SN NR)

It is herein disclosed a method in a **second network node operating as Secondary Node (MN)** for a UE in MR-DC configured with conditional reconfiguration (e.g. Conditional PSCell Change - CPC execution) the method comprising:
- Generating an LTE/E-UTRA SCG configuration; AND
   ∘ In one embodiment the E-UTRA SCG configuration is in an *RRCConnectionReconfiguration* in E-UTRA format;
   ∘ In one embodiment the *RRCConnectionReconfiguration* in E-UTRA format contain a CPC configuration, comprising for each target candidate an execution condition configuration to be monitored (e.g. like an A3 and/or A5 event) and an *RRCConnectionReconfiguration* to be stored by the UE;
- Transmitting the E-UTRA SCG configuration to a Master Node;
- Receiving from the MN a first E-UTRA complete message in E-UTRA format e.g. a first E-UTRA *RRCConnectionReconfigurationComplete* message;
   ∘ The reception of the message indicates to the SN that the UE has successfully received the message and is able to comply to the CPC configuration, at least the execution condition configuration(s);
- Receiving from the MN a second E-UTRA complete message in E-UTRA format e.g. a second E-UTRA *RRCConnectionReconfigurationComplete* message;

The reception of the message indicates to the SN that the UE has successfully executed CPC in a target cell candidate;

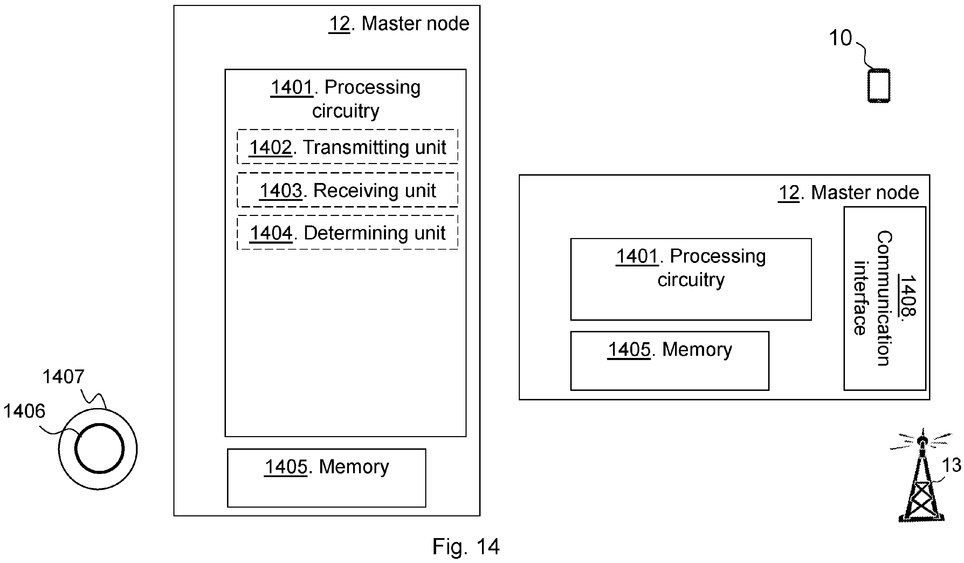

**Fig. 14** is a block diagram depicting the MN 12, in two embodiments, for handling cell change of the secondary cell for the UE 10, wherein the UE has the connection to the master node of the first RAT, and the connection to the secondary node of the second RAT, e.g. for handling communication, such as handling, enabling or performing handover, in the wireless communication network 1 according to embodiments herein.

The MN 12 may comprise **processing circuitry 1401**, e.g. one or more processors, configured to perform the methods herein.

The MN 12 may comprise **a transmitting unit 1402**, e.g. a transmitter or a transceiver. The MN 12, the processing circuitry 1401 and/or the transmitting unit 1402 is configured to transmit to the UE, the reconfiguration for the conditional cell change of the secondary cell of the second RAT embedded in the first reconfiguration message of the first RAT. For example, transmit to the UE 10 served by the MN 12 in the first cell 11, the first RAT message. E.g. transmit an NR message including an LTE SCG configuration. In one embodiment the NR message is an RRCReconfiguration; In one embodiment the LTE SCG configuration is an RRCConnectionReconfiguration in LTE format; In one embodiment the RRCConnectionReconfiguration in LTE format contain a CPC configuration, comprising for each target candidate an execution condition configuration to be monitored (e.g. like an A3 and/or A5 event) and an RRCConnectionReconfiguration to be stored by the UE.

The MN 12 may comprise **a receiving unit 1403**, e.g. a receiver or a transceiver. The MN 12, the processing circuitry 1401 and/or the receiving unit 1403 is configured to receive from the UE 10, the first complete message of the second RAT embedded in the other message of the first RAT, wherein the first complete message indicates that the UE is able to comply to the conditional reconfiguration. For example, receive a complete message in second RAT format embedded with a first RAT complete message in first RAT format. In one embodiment the NR message is an RRCReconfigurationComplete; In one embodiment the LTE message is an RRCConnectionReconfigurationComplete.

The MN 12, the processing circuitry 1401 and/or the transmitting unit 1402 is configured to transmit the first complete message to the secondary node.

The MN 12, the processing circuitry 1401 and/or the receiving unit 1403 is configured to receive from the UE, the second complete message, indicating the condition fulfilled at the UE, of the second RAT embedded in the RRC message of the first RAT. The RRC message may be *ULInformationTransferMRDC message.* The second complete message may be received over the SRB1.

The MN 12, the processing circuitry 1401 and/or the transmitting unit 1402 is configured to transmit the second complete message to the secondary node.

The MN 12 further comprises **a memory 1405.** The memory comprises one or more units to be used to store data on, such as indications, strengths or qualities, grants, messages, execution conditions, user data, reconfiguration, configurations, scheduling information, timers, applications to perform the methods disclosed herein when being executed, and similar. The MN 12 comprises **a communication interface 1408** comprising transmitter, receiver, transceiver and/or one or more antennas. Thus, it is herein provided the MN for handling a cell change of the secondary cell for the UE 10, wherein the UE 10 has the connection to the master node of the first RAT, and the connection to the secondary node of the second RAT in a wireless communications network, wherein the MN comprises processing circuitry and a memory, said memory comprising instructions executable by said processing circuitry whereby said MN is operative to perform any of the methods herein.

The methods according to the embodiments described herein for the MN 12 are respectively implemented by means of e.g. **a computer program product 1406** or a computer program product, comprising instructions, i.e., software code portions, which, when executed on at least one processor, cause the at least one processor to carry out the actions described herein, as performed by the MN 12. The computer program product 1406 may be stored on **a computer-readable storage medium 1407**, e.g. a universal serial bus (USB) stick, a disc or similar. The computer-readable storage medium 1407, having stored thereon the computer program product, may comprise the instructions which, when executed on at least one processor, cause the at least one processor to carry out the actions described herein, as performed by the MN 12. In some embodiments, the computer-readable storage medium may be a non-transitory or transitory computer-readable storage medium.

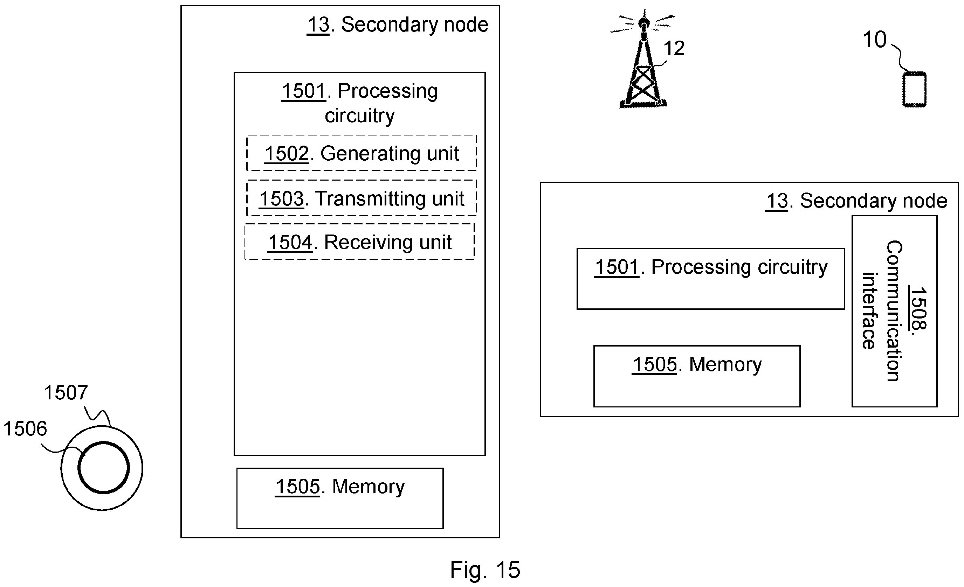

**Fig. 15** is a block diagram depicting the second radio network node 13 i.e. the secondary node 13, in two embodiments, for handling cell change of the secondary cell for the UE 10. For example, handling communication, e.g. handling, enabling or performing handover, in the wireless communication network 1 according to embodiments herein.

The secondary node 13 may comprise **processing circuitry 1501**, e.g. one or more processors, configured to perform the methods herein.

The secondary node 13 may comprise **a generating unit 1502**, e.g. a transmitter or a transceiver. The secondary node 13, the processing circuitry 1501 and/or the generating unit 1502 may be configured to generate a *first RAT e.g. LTE*/*E-UTRA , SCG configuration.*

The secondary node 13 may comprise **a transmitting unit 1503**, e.g. a transmitter or a transceiver. The secondary node 13, the processing circuitry 1501 and/or the transmitting unit 1503 is configured to transmit to the master node, the reconfiguration message for the conditional reconfiguration of the secondary cell of the second RAT, e.g. transmit *the E-UTRA SCG configuration to the Master Node i.e. the first radio network node 12.*

The secondary node 13 may comprise **a receiving unit 1504**, e.g. a receiver or a transceiver. The secondary node 13, the processing circuitry 1501 and/or the receiving unit 1504 is configured to receive from the master node, the first complete message of the second RAT, wherein the first complete message indicates that the UE is able to comply to the conditional reconfiguration. E.g. receive *from the MN a first E-UTRA complete message in E-UTRA format e.g. a first E-UTRA* RRCConnectionReconfigurationComplete *message. The reception of the message indicates to the SN that the UE has successfully received the message and is able to comply to the CPC configuration, at least the execution condition configuration(s).*

The secondary node 13, the processing circuitry 1501 and/or the receiving unit 1504 is further configured to receive from the master node, the second complete message of the second RAT indicating the condition fulfilled at the UE. The secondary node 13, the processing circuitry 1501 and/or a receiving unit may further be configured to receive *from the MN a second E-UTRA complete message in E-UTRA format e.g. a second E-UTRA* RRCConnectionReconfigurationComplete *message.*

The secondary node 13 further comprises **a memory 1505**. The memory comprises one or more units to be used to store data on, such as indications, strengths or qualities, grants, messages, execution conditions, user data, reconfiguration, configurations, scheduling information, timers, applications to perform the methods disclosed herein when being executed, and similar. The secondary node 13 comprises **a communication interface 1508** comprising transmitter, receiver, transceiver and/or one or more antennas. Thus, it is herein provided the SN for handling a cell change of the secondary cell for the UE 10, wherein the UE 10 has the connection to the master node of the first RAT, and the connection to the secondary node of the second RAT in a wireless communications network, wherein the SN comprises processing circuitry and a memory, said memory comprising instructions executable by said processing circuitry whereby said SN is operative to perform any of the methods herein.

The methods according to the embodiments described herein for the secondary node 13 are respectively implemented by means of e.g. **a computer program product 1506** or a computer program product, comprising instructions, i.e., software code portions, which, when executed on at least one processor, cause the at least one processor to carry out the actions described herein, as performed by the secondary node 13. The computer program product 1506 may be stored on **a computer-readable storage medium 1507**, e.g. a universal serial bus (USB) stick, a disc or similar. The computer-readable storage medium 1507, having stored thereon the computer program product, may comprise the instructions which, when executed on at least one processor, cause the at least one processor to carry out the actions described herein, as performed by the secondary node 13. In some embodiments, the computer-readable storage medium may be a non-transitory or transitory computer-readable storage medium.

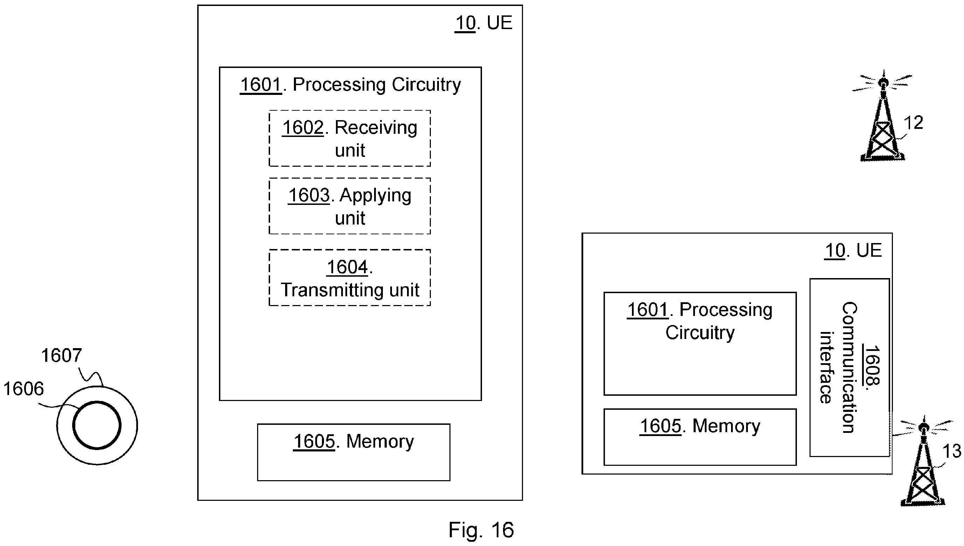

**Fig. 16** is a block diagram depicting the UE 10, in two embodiments, for handling communication, e.g. handling, enabling or performing handover, in the wireless communication network 1 according to embodiments herein. Thus, it is herein disclosed the UE for handling cell change of a secondary cell for the UE 10.

The UE 10 may comprise **processing circuitry 1601**, e.g. one or more processors, configured to perform the methods herein.

The UE 10 may comprise **a receiving unit 1602**, e.g. a receiver or a transceiver. The UE 10, the processing circuitry 1601 and/or the receiving unit 1602 is configured to receive from the master node 12, the message of the first RAT comprising the reconfiguration message for the conditional reconfiguration of the secondary cell of the second RAT. E.g. receives, from the first radio network node 12 serving the UE 10 in the first cell, a first RAT message including an SCG configuration of a second RAT; AND

The UE 10 may comprise **an applying unit 1603**. The UE 10, the processing circuitry 1601 and/or the applying unit 1603 may be configured to apply the conditional reconfiguration, and perform an action according to the conditional reconfiguration such as apply the SCG configuration of the second RAT e.g. reconfiguration. E.g. the UE 10 may apply an *RRCReconfiguration* in second RAT format containing CPC configuration(s), and may start monitoring conditional reconfiguration i.e. it starts to monitor the execution condition(s) (e.g. like an A3 and/or A5 event).

The UE 10 may comprise **a transmitting unit 1604**, e.g. a transmitter or a transceiver. The UE 10, the processing circuitry 1601 and/or the transmitting unit 1604 is configured to transmit to the MN 12, the first complete message of the second RAT embedded in the other message of the first RAT, wherein the first complete message indicates that the UE is able to comply to the conditional reconfiguration. The UE 10, the processing circuitry 1601 and/or the transmitting unit 1604 is further configured to transmit, upon fulfilment of the condition of the conditional reconfiguration, to the master node, the second complete message of the second RAT embedded in the RRC message of the first RAT. The second complete message may be transmitted over the SRB1.

The UE 10 further comprises **a memory 1605**. The memory comprises one or more units to be used to store data on, such as indications, strengths or qualities, grants, indications, reconfiguration, configuration, values, scheduling information, timers, applications to perform the methods disclosed herein when being executed, and similar. The UE 10 comprises **a communication interface 1608** comprising transmitter, receiver, transceiver and/or one or more antennas. Thus, it is herein provided the UE for handling a cell change of the secondary cell for the UE 10, wherein the UE 10 has the connection to the master node of the first RAT, and the connection to the secondary node of the second RAT in a wireless communications network, wherein the UE comprises processing circuitry and a memory, said memory comprising instructions executable by said processing circuitry whereby said UE is operative to perform any of the methods herein.

The methods according to the embodiments described herein for the UE 10 are respectively implemented by means of e.g. **a computer program product 1606** or a computer program product, comprising instructions, i.e., software code portions, which, when executed on at least one processor, cause the at least one processor to carry out the actions described herein, as performed by the UE 10. The computer program product 1606 may be stored on **a computer-readable storage medium 1607**, e.g. a universal serial bus (USB) stick, a disc or similar. The computer-readable storage medium 1607, having stored thereon the computer program product, may comprise the instructions which, when executed on at least one processor, cause the at least one processor to carry out the actions described herein, as performed by the UE 10. In some embodiments, the computer-readable storage medium may be a non-transitory or transitory computer-readable storage medium.

In some embodiments a more general term "radio network node" is used and it can correspond to any type of radio network node or any network node, which communicates with a wireless device and/or with another network node. Examples of network nodes are NodeB, Master eNB, Secondary eNB, a network node belonging to Master cell group (MCG) or Secondary Cell Group (SCG), base station (BS), multistandard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc., Operation and Maintenance (O&M), Operation Support System (OSS), Self-Organizing Network (SON), positioning node e.g. Evolved Serving Mobile Location Centre (E-SMLC), Minimizing Drive Test (MDT) etc.

In some embodiments the non-limiting term wireless device or user equipment (UE) is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, PDA, PAD, Tablet, mobile terminals, smart phone, laptop embedded equipped (LEE), laptop mounted equipment (LME), USB dongles etc.

The embodiments are described for 5G. However the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

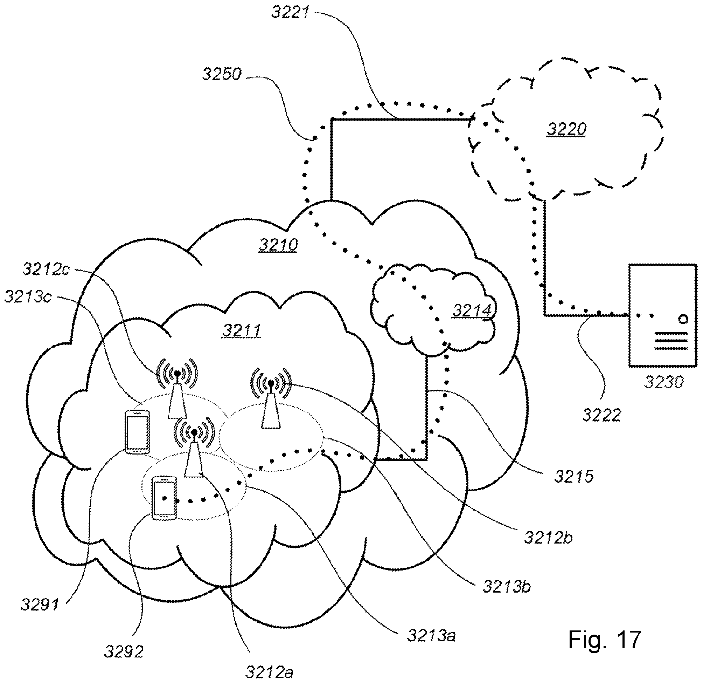

With reference to **Fig 17**, in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 17 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signalling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

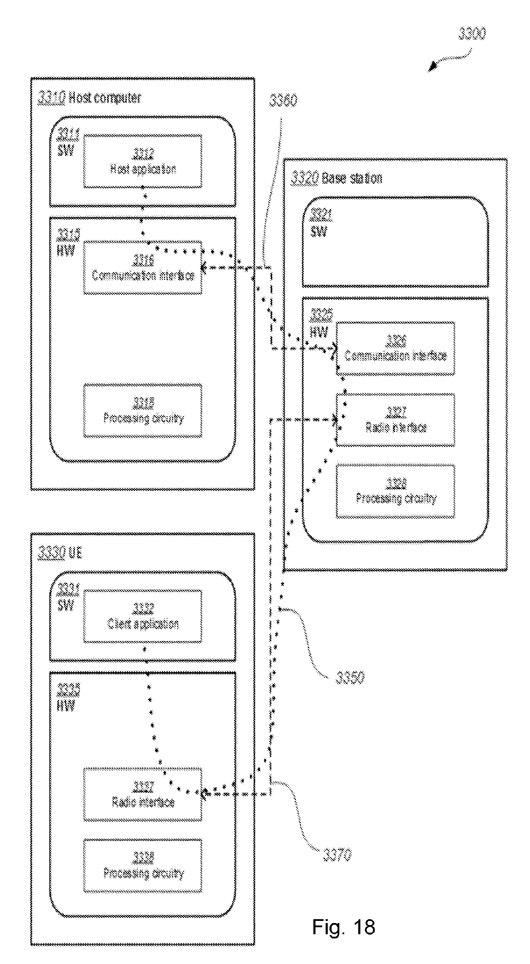

Example implementations, in accordance with an embodiment, of the UE, base station and host computer discussed in the preceding paragraphs will now be described with reference to **Fig. 18**. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig. 18) served by the base station 3320. The communication interface 3326 may be configured to facilitate a connection 3360 to the host computer 3310. The connection 3360 may be direct or it may pass through a core network (not shown in Fig. 18) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 18 may be identical to the host computer 3230, one of the base stations 3212a, 3212b, 3212c and one of the UEs 3291, 3292 of Fig. 17, respectively. This is to say, the inner workings of these entities may be as shown in Fig. 18 and independently, the surrounding network topology may be that of Fig. 17.

In Fig. 18, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may achieving both high reliability and low data interruption (0ms or close to 0ms), and at the same time keep the transport network load at an acceptable low level caused by forwarding of DL data packets and thereby provide benefits such as improved battery time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signalling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

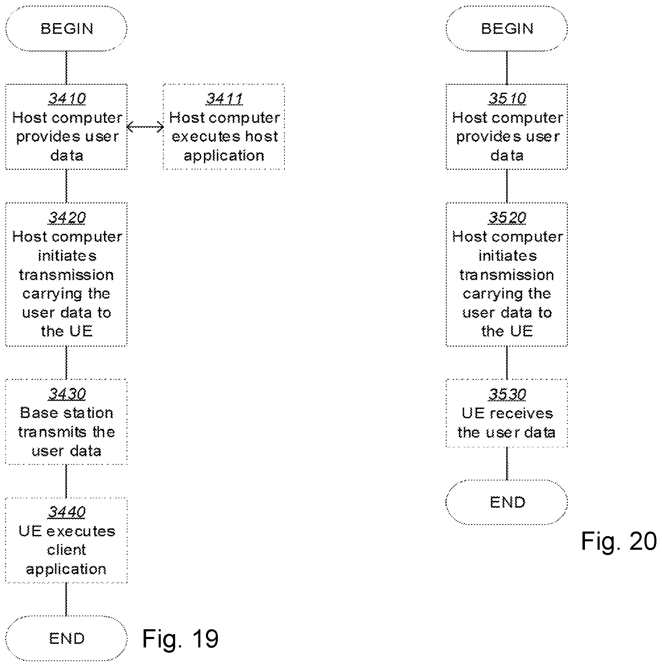

**Fig. 19** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 19 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 20** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 20 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

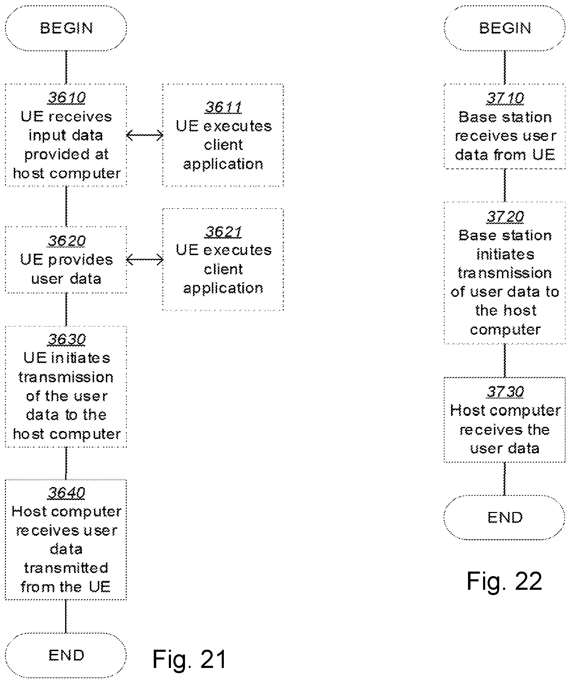

**Fig. 21** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 21 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 22** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 22 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

| Abbreviation | Explanation |
|---|---|
| 3GPP | 3rd Generation Partnership Project |
| 5G | 5th Generation |
| 5GS | 5G System |
| 5GC | 5G Core network |
| CHO | Conditional Handover |
| CR | Change Request |
| DAPS | Dual Active Protocol Stack |
| DRB | Data Radio Bearer |
| E-UTRAN | Evolved Universal Terrestrial Access Network |
| gNB | 5G Node B |
| HO | Handover |
| LTE | Long-term Evolution |
| NG | The interface/reference point between the RAN and the CN in 5G/NR |
| NG-C | The control plane part of NG (between a gNB and an AMF). |
| NG-U | The user plane part of NG (between a gNB and a UPF). |
| NG-RAN | Next Generation Radio Access Network |
| NR | New Radio |
| PDCP | Packet Data Convergence Protocol |
| PDU | Protocol Data Unit |
| RAN | Radio Access Network |
| RB | Radio Bearer |
| RLC | Radio Link Control |
| ROHC | Robust Header Compression |
| RRC | Radio Resource Control |
| SDU | Service Data Unit |
| SGW | Serving Gateway |
| SN | Sequence Number |
| TS | Technical Specification |
| UE | User Equipment |
| UL | Uplink |
| UPF | User Plane Function |
| Xn | The interface/reference point between two gNBs |

## Claims

1. A method performed by a user equipment, UE, (10) for handling a Conditional primary secondary cell change procedure, CPC, of a secondary cell for the UE (10), the method comprising:
receiving (701) from a master node, a message of a first radio access technology, RAT, comprising a reconfiguration message for a CPC reconfiguration of the secondary cell of a second RAT, wherein the first RAT is different than the second RAT;
transmitting (702) to the master node, a first complete message of the second RAT embedded in another message of the first RAT, wherein the first complete message indicates that the UE is able to comply to the CPC reconfiguration; and
upon fulfilment of a condition of the CPC reconfiguration, transmitting (704) to the master node, a second complete message of the second RAT embedded in a radio resource control, RRC, message of the first RAT.

2. The method according to claim 1, wherein the second complete message is transmitted over a signalling radio bearer one, SRB1.

3. The method according to any of the claims claim 1-2, further comprising applying (703) the CPC reconfiguration, performing an action according to the CPC reconfiguration.

4. The method according to any of the claims claim 1-3, wherein the first RAT is LTE and the second RAT is new radio, NR.

5. The method according to any of the claims claim 1-4, wherein the RRC message of the first RAT is a ULInformationTransferMRDC message.

6. The method according to any of the claims claim 1-5, wherein the reconfiguration message is a RRCreconfiguration message and the message of the first RAT is a RRCConnectionReconfiguration message.

7. The method according to any of the claims claim 1-6, wherein the first complete message of the second RAT is a RRCreconfiguration complete message and the other message of the first RAT is a RRCConnectionReconfiguration complete message.

8. The method according to any of claims 1-2, wherein the first RAT is new radio, NR, and the second RAT is LTE.

9. The method according to claim 8, wherein the reconfiguration message is a RRCconnectionreconfiguration message and the message of the first RAT is a RRCreconfiguration message.

10. The method according to any of the claims claim 8-9, wherein the first complete message of the second RAT is a RRCConnectionReconfiguration complete message and the other message of the first RAT is a RRCreconfiguration complete message.

11. A method performed by a master node for handling a conditional primary secondary cell change procedure, CPC, of a secondary cell for a user equipment, UE, (10), the method comprising:
transmitting (801) to the UE, a message of a first radio access technology, RAT, comprising a reconfiguration message for a CPC reconfiguration of the secondary cell of a second RAT, wherein the first RAT is different than the second RAT;
receiving (802) from the UE, a first complete message of the second RAT embedded in another message of the first RAT, wherein the first complete message indicates that the UE is able to comply to the CPC reconfiguration;
transmitting (803) the first complete message to a secondary node;
receiving (804) from the UE, a second complete message, indicating a condition fulfilled at the UE, of the second RAT embedded in a radio resource control, RRC, message of the first RAT; and
transmitting (805) the second complete message to the secondary node.

12. The method according to claim 11, wherein the second complete message is received over a signalling radio bearer one, SRB1.

13. The method according to any of the claims 11-12, wherein the first RAT is LTE and the second RAT is new radio, NR.

14. The method according to any of the claims 11-13, wherein the RRC message of the first RAT is an ULInformationTransferMRDC message.

15. The method according to any of the claims 11-14, wherein the reconfiguration message is a RRCreconfiguration message and the message of the first RAT is a RRCConnectionReconfiguration message.

16. The method according to any of the claims 11-15, wherein the first complete message of the second RAT is a RRCreconfiguration complete message and the other message of the first RAT is a RRCConnectionReconfiguration complete message.

17. The method according to claim 11-12, wherein the first RAT is new radio, NR, and the second RAT is LTE.

18. The method according to claim 17, wherein the reconfiguration message is a RRCconnectionreconfiguration message and the message of the first RAT is a RRCreconfiguration message.

19. A method performed by a secondary node for handling a conditional primary secondary cell change procedure, CPC, of a secondary cell for a user equipment, UE, (10), the method comprising:
transmitting (901) to a master node of a first radio access technology, RAT, a reconfiguration message for a CPC reconfiguration of the secondary cell of a second RAT, wherein the first RAT is different than the second RAT;
receiving (902) from the master node, a first complete message of the second RAT, wherein the first complete message indicates that the UE is able to comply to the CPC reconfiguration; and
receiving (903) from the master node, a second complete message of the second RAT indicating a condition fulfilled at the UE (10).

20. A user equipment, UE, (10) for handling a conditional primary secondary cell change procedure, CPC, of a secondary cell for the UE (10), wherein the UE is configured to:
receive from a master node, a message of a first radio access technology, RAT, comprising a reconfiguration message for a CPC reconfiguration of the secondary cell of a second RAT, wherein the first RAT is different than the second RAT;
transmit to the master node, a first complete message of the second RAT embedded in another message of the first RAT, wherein the first complete message indicates that the UE is able to comply to the CPC reconfiguration; and
upon fulfilment of a condition of the CPC reconfiguration, transmit to the master node, a second complete message of the second RAT embedded in a radio resource control, RRC, message of the first RAT.

21. A master node for handling a conditional primary secondary cell change procedure, CPC, of a secondary cell for a user equipment, UE, (10), wherein the master node is configured to
transmit to the UE, a message of a first radio access technology, RAT, comprising a reconfiguration message for a CPC reconfiguration of the secondary cell of a second RAT, wherein the first RAT is different than the second RAT;
receive from the UE, a first complete message of the second RAT embedded in another message of the first RAT, wherein the first complete message indicates that the UE is able to comply to the CPC reconfiguration;
transmit the first complete message to a secondary node;
receive from the UE, a second complete message, indicating a condition fulfilled at the UE, of the second RAT embedded in a radio resource control, RRC, message of the first RAT; and
transmit the second complete message to the secondary node.

22. A secondary node for handling a conditional primary secondary cell change procedure, CPC, of a secondary cell for a user equipment, UE, (10), wherein the secondary node is configured to:
transmit to a master node of a first radio access technology, RAT, a reconfiguration message for a CPC reconfiguration of the secondary cell of a second RAT, wherein the first RAT is different than the second RAT;
receive from the master node, a first complete message of the second RAT, wherein the first complete message indicates that the UE is able to comply to the CPC reconfiguration; and
receive from the master node, a second complete message of the second RAT indicating a condition fulfilled at the UE (10).

## Patentansprüche

1. Durch ein Benutzergerät, UE, (10) durchgeführtes Verfahren zur Handhabung einer Prozedur zum bedingten Wechsel der primären Sekundärzelle, CPC, einer Sekundärzelle für das UE (10), wobei das Verfahren Folgendes umfasst:
Empfangen (701) von einem Master-Knoten einer Nachricht einer ersten Funkzugriffstechnologie, RAT, die eine Rekonfigurationsnachricht für eine CPC-Rekonfiguration der Sekundärzelle einer zweiten RAT umfasst, wobei sich die erste RAT von der zweiten RAT unterscheidet;
Übertragen (702) an den Master-Knoten einer ersten Abschlussnachricht der zweiten RAT, die in eine andere Nachricht der ersten RAT eingebettet ist, wobei die erste Abschlussnachricht angibt, dass das UE dazu fähig ist, die CPC-Rekonfiguration einzuhalten; und
beim Erfüllen einer Bedingung der CPC-Rekonfiguration Übertragen (704) an den Master-Knoten einer zweiten Abschlussnachricht der zweiten RAT, die in eine Funkressourcensteuer-, RRC-, Nachricht der ersten RAT eingebettet ist.

2. Verfahren nach Anspruch 1, wobei die zweite Abschlussnachricht über einen Signalisierungsfunkträger eins, SRB1, übertragen wird.

3. Verfahren nach einem der Ansprüche 1-2, ferner umfassend Anwenden (703) der CPC-Rekonfiguration durch Durchführen einer Handlung gemäß der CPC-Rekonfiguration.

4. Verfahren nach einem der Ansprüche 1-3, wobei die erste RAT LTE ist und die zweite RAT New Radio, NR, ist.

5. Verfahren nach einem der Ansprüche 1-4, wobei die RRC-Nachricht der ersten RAT eine ULInformationTransferMRDC-Nachricht ist.

6. Verfahren nach einem der Ansprüche 1-5, wobei die Rekonfigurationsnachricht eine RRCreconfiguration-Nachricht ist und die Nachricht der ersten RAT eine RRCConnectionReconfiguration-Nachricht ist.

7. Verfahren nach einem der Ansprüche 1-6, wobei die erste Abschlussnachricht der zweiten RAT eine RRCreconfiguration-Abschlussnachricht ist und die andere Nachricht der ersten RAT eine RRCConnectionReconfiguration-Abschlussnachricht ist.

8. Verfahren nach einem der Ansprüche 1-2, wobei die erste RAT New Radio, NR, ist und die zweite RAT LTE ist.

9. Verfahren nach Anspruch 8, wobei die Rekonfigurationsnachricht eine RRCconnectionreconfiguration-Nachricht ist und die Nachricht der ersten RAT eine RRCreconfiguration-Nachricht ist.

10. Verfahren nach einem der Ansprüche 8-9, wobei die erste Abschlussnachricht der zweiten RAT eine RRCConnectionReconfiguration-Abschlussnachricht ist und die andere Nachricht der ersten RAT eine RRCreconfiguration-Abschlussnachricht ist.

11. Durch einen Master-Knoten durchgeführtes Verfahren zur Handhabung einer Prozedur zum bedingten Wechsel der primären Sekundärzelle, CPC, einer Sekundärzelle für ein Benutzergerät, UE, (10), wobei das Verfahren Folgendes umfasst:
Übertragen (801) an das UE einer Nachricht einer ersten Funkzugriffstechnologie, RAT, die eine Rekonfigurationsnachricht für eine CP-Rekonfiguration der Sekundärzelle einer zweiten RAT umfasst, wobei sich die erste RAT von der zweiten RAT unterscheidet;
Empfangen (802) von dem UE einer ersten Abschlussnachricht der zweiten RAT, die in eine andere Nachricht der ersten RAT eingebettet ist, wobei die erste Abschlussnachricht angibt, dass das UE dazu fähig ist, die CPC-Rekonfiguration einzuhalten;
Übertragen (803) der ersten Abschlussnachricht an einen Sekundärknoten;
Empfangen (804) von dem UE einer zweiten Abschlussnachricht, die eine an dem UE erfüllte Bedingung angibt, der zweiten RAT, die in eine Funkressourcensteuer-, RRC-, Nachricht der ersten RAT eingebettet ist; und
Übertragen (805) der zweiten Abschlussnachricht an den Sekundärknoten.

12. Verfahren nach Anspruch 11, wobei die zweite Abschlussnachricht über einen Signalisierungsfunkträger eins, SRB1, empfangen wird.

13. Verfahren nach einem der Ansprüche 11-12, wobei die erste RAT LTE ist und die zweite RAT New Radio, NR, ist.

14. Verfahren nach einem der Ansprüche 11-13, wobei die RRC-Nachricht der ersten RAT eine ULInformationTransferMRDC-Nachricht ist.

15. Verfahren nach einem der Ansprüche 11-14, wobei die Rekonfigurationsnachricht eine RRCreconfiguration-Nachricht ist und die Nachricht der ersten RAT eine RRCConnectionReconfiguration-Nachricht ist.

16. Verfahren nach einem der Ansprüche 11-15, wobei die erste Abschlussnachricht der zweiten RAT eine RRCreconfiguration-Abschlussnachricht ist und die andere Nachricht der ersten RAT eine RRCConnectionReconfiguration-Abschlussnachricht ist.

17. Verfahren nach Anspruch 11-12, wobei die erste RAT New Radio, NR, ist und die zweite RAT LTE ist.

18. Verfahren nach Anspruch 17, wobei die Rekonfigurationsnachricht eine RRCconnectionreconfiguration-Nachricht ist und die Nachricht der ersten RAT eine RRCreconfiguration-Nachricht ist.

19. Durch einen Sekundärknoten durchgeführtes Verfahren zur Handhabung einer Prozedur zum bedingten Wechsel der primären Sekundärzelle, CPC, einer Sekundärzelle für ein Benutzergerät, UE, (10), wobei das Verfahren Folgendes umfasst:
Übertragen (901) an einen Master-Knoten einer ersten Funkzugriffstechnologie, RAT, einer Rekonfigurationsnachricht für eine CPC-Rekonfiguration der Sekundärzelle einer zweiten RAT, wobei sich die erste RAT von der zweiten RAT unterscheidet;
Empfangen (902) von dem Master-Knoten einer ersten Abschlussnachricht der zweiten RAT, wobei die erste Abschlussnachricht angibt, dass das UE dazu fähig ist, die CPC-Rekonfiguration einzuhalten; und
Empfangen (903) von dem Master-Knoten einer zweiten Abschlussnachricht der zweiten RAT, die eine an dem UE (10) erfüllte Bedingung angibt.

20. Benutzergerät, UE, (10) zur Handhabung einer Prozedur zum bedingten Wechsel der primären Sekundärzelle, CPC, einer Sekundärzelle für das UE (10), wobei das UE zu Folgendem konfiguriert ist:
Empfangen von einem Master-Knoten einer Nachricht einer ersten Funkzugriffstechnologie, RAT, die eine Rekonfigurationsnachricht für eine CPC-Rekonfiguration der Sekundärzelle einer zweiten RAT umfasst, wobei sich die erste RAT von der zweiten RAT unterscheidet;
Übertragen an den Masterknote4n einer ersten Abschlussnachricht der zweiten RAT, die in eine andere Nachricht der ersten RAT eingebettet ist, wobei die erste Abschlussnachricht angibt, dass das UE dazu in der Lage ist, die CPC-Rekonfiguration einzuhalten; und
beim Erfüllen einer Bedingung der CPC-Rekonfiguration Übertragen an den Master-Knoten einer zweiten Abschlussnachricht der zweiten RAT, die in eine Funkressourcensteuer-, RRC-, Nachricht der ersten RAT eingebettet ist.

21. Master-Knoten zur Handhabung einer Prozedur zum bedingten Wechsel der primären Sekundärzelle, CPC, einer Sekundärzelle für ein Benutzergerät, UE, (10), wobei der Master-Knoten zu Folgendem konfiguriert ist:
Übertragen an das UE einer Nachricht einer ersten Funkzugriffstechnologie, RAT, die eine Rekonfigurationsnachricht für eine CPC-Rekonfiguration der Sekundärzelle einer zweiten RAT umfasst, wobei sich die erste RAT von der zweiten RAT unterscheidet;
Empfangen von dem UE einer ersten Abschlussnachricht der zweiten RAT, die in eine andere Nachricht der ersten RAT eingebettet ist, wobei die erste Abschlussnachricht angibt, dass das UE dazu in der Lage ist, die CPC-Rekonfiguration einzuhalten;
Übertragen der ersten Abschlussnachricht an einen Sekundärknoten;
Empfangen von dem UE einer zweiten Abschlussnachricht, die eine an dem UE erfüllte Bedingung angibt, der zweiten RAT, die in eine Funkressourcensteuer-, RCC-, Nachricht der ersten RAT eingebettet ist; und
Übertragen der zweiten Abschlussnachricht an den Sekundärknoten.

22. Sekundärknoten zur Handhabung einer Prozedur zum bedingten Wechsel der primären Sekundärzelle, CPC, einer Sekundärzelle für ein Benutzergerät, UE, (10), wobei der Sekundärknoten zu Folgendem konfiguriert ist:
Übertragen an einen Master-Knoten einer ersten Funkzugriffstechnologie, RAT, einer Rekonfigurationsnachricht für eine CPC-Rekonfiguration der Sekundärzelle einer zweiten RAT, wobei sich die erste RAT von der zweiten RAT unterscheidet;
Empfangen von dem Master-Knoten einer ersten Abschlussnachricht der zweiten RAT, wobei die erste Abschlussnachricht angibt, dass das UE dazu in der Lage ist, die CPC-Rekonfiguration einzuhalten; und
Empfangen von dem Master-Knoten einer zweiten Abschlussnachricht der zweiten RAT, die eine an dem UE (10) erfüllte Bedingung angibt.

## Revendications

1. Procédé exécuté par un équipement utilisateur, UE, (10) pour prendre en charge une procédure de changement de cellule secondaire primaire conditionnelle, CPC, d'une cellule secondaire pour l'UE (10), le procédé comprenant les étapes consistant à :
recevoir (701), à partir d'un noeud maître, un message d'une première technologie d'accès radio, RAT, comprenant un message de reconfiguration pour une reconfiguration CPC de la cellule secondaire d'une deuxième RAT, la première RAT étant différente de la deuxième RAT ;
transmettre (702), au noeud maître, un premier message complet de la deuxième RAT intégré dans un autre message de la première RAT, le premier message complet indiquant que l'UE est en mesure de se conformer à la reconfiguration CPC ; et
lorsque la condition de reconfiguration du CPC est remplie, transmettre (704) au noeud maître un deuxième message complet de la deuxième RAT intégré dans un message de contrôle des ressources radio, RRC, de la première RAT.

2. Procédé selon la revendication 1, dans lequel le deuxième message complet est transmis sur un support radio de signalisation un, SRB1.

3. Procédé selon l'une quelconque des revendications 1 à 2, comprenant en outre l'application (703) de la reconfiguration CPC, l'exécution d'une action selon la reconfiguration CPC.

4. Procédé selon l'une quelconque des revendications 1 à 3, dans lequel la première RAT est LTE, et la deuxième RAT est une nouvelle radio, NR.

5. Procédé selon l'une quelconque des revendications 1 à 4, dans lequel le message RRC de la première RAT est un message ULInformationTransferMRDC.

6. Procédé selon l'une quelconque des revendications 1 à 5, dans lequel le message de reconfiguration est un message de reconfiguration RRC, et le message de la première RAT est un message de reconfiguration de connexion RRC.

7. Procédé selon l'une quelconque des revendications 1 à 6, dans lequel le premier message complet de la deuxième RAT est un message complet de reconfiguration RRC, et l'autre message de la deuxième RAT est un message complet de reconfiguration de connexion RRC.

8. Procédé selon l'une quelconque des revendications 1 à 2, dans lequel la première RAT est une nouvelle radio, NR, et la deuxième RAT est LTE.

9. Procédé selon la revendication 8, dans lequel le message de reconfiguration est un message de reconfiguration de connexion RRC, et le message de la première RAT est un message de reconfiguration RRC.

10. Procédé selon l'une quelconque des revendications 8 à 9, dans lequel le premier message complet de la deuxième RAT est un message complet de reconfiguration de connexion RRC, et l'autre message du premier RAT est un message complet de reconfiguration RRC.

11. Procédé exécuté par un noeud maître pour prendre en charge une procédure de changement de cellule secondaire primaire conditionnelle, CPC, d'une cellule secondaire pour un équipement utilisateur, UE, (10), le procédé comprenant les étapes consistant à :
transmettre (801), à l'UE, un message d'une première technologie d'accès radio, RAT, comprenant un message de reconfiguration pour une reconfiguration CPC de la cellule secondaire d'une deuxième RAT, la première RAT étant différente de la deuxième RAT ;
recevoir (802), à partir de l'UE, un premier message complet de la deuxième RAT intégré dans un autre message de la première RAT, le premier message complet indiquant que l'UE est en mesure de se conformer à la reconfiguration CPC ; et
transmettre (803) le premier message complet à un noeud secondaire ;
recevoir (804) à partir de l'UE, un deuxième message complet, indiquant une condition remplie au niveau de l'UE, provenant de la deuxième RAT intégré dans un message de contrôle des ressources radio, RRC, de la première RAT ; et
transmettre (805) le deuxième message complet au noeud secondaire.

12. Procédé selon la revendication 11, dans lequel le deuxième message complet est reçu sur un support radio de signalisation un, SRB1.

13. Procédé selon l'une quelconque des revendications 11 à 12, dans lequel la première RAT est LTE, et la deuxième RAT est une nouvelle radio, NR.

14. Procédé selon l'une quelconque des revendications 11 à 13, dans lequel le message RRC de la première RAT est un message ULInformationTransferMRDC.

15. Procédé selon l'une quelconque des revendications 11 à 14, dans lequel le message de reconfiguration est un message de reconfiguration RRC, et le message de la première RAT est un message de reconfiguration de connexion RRC.

16. Procédé selon l'une quelconque des revendications 11 à 15, dans lequel le premier message complet de la deuxième RAT est un message complet de reconfiguration RRC, et l'autre message de la première RAT est un message complet de reconfiguration de connexion RRC.

17. Procédé selon l'une quelconque des revendications 11 à 12, dans lequel la première RAT est une nouvelle radio, NR, et la deuxième RAT est LTE.

18. Procédé selon la revendication 17, dans lequel le message de reconfiguration est un message de reconfiguration de connexion RRC, et le message de la première RAT est un message de reconfiguration RRC.

19. Procédé exécuté par un noeud secondaire pour prendre en charge une procédure de changement de cellule secondaire primaire conditionnelle, CPC, d'une cellule secondaire pour un équipement utilisateur, UE (10), le procédé comprenant les étapes consistant à :
transmettre (901), à un noeud maître d'une première technologie d'accès radio, RAT, un message de reconfiguration pour une reconfiguration CPC de la cellule secondaire d'une deuxième RAT, la première RAT étant différente de la deuxième RAT ;
recevoir (902), à partir du noeud maître, un premier message complet de la deuxième RAT, le premier message complet indiquant que l'UE est en mesure de se conformer à la reconfiguration CPC ; et
recevoir (903), à partir du noeud maître, un deuxième message complet de la deuxième RAT indiquant une condition remplie au niveau de l'UE (10).

20. Equipement utilisateur, UE, (10) pour prendre en charge une procédure de changement de cellule secondaire primaire conditionnelle, CPC, d'une cellule secondaire pour l'UE (10), dans lequel l'UE est configuré pour :
recevoir, à partir d'un noeud maître, un message d'une première technologie d'accès radio, RAT, comprenant un message de reconfiguration pour une reconfiguration CPC de la cellule secondaire d'une deuxième RAT, la première RAT étant différente de la deuxième RAT ;
transmettre, au noeud maître, un premier message complet de la deuxième RAT intégré dans un autre message de la première RAT, le premier message complet indiquant que l'UE est en mesure de se conformer à la reconfiguration CPC ; et
lorsque la condition de reconfiguration du CPC est remplie, transmettre au noeud maître, un deuxième message complet de la deuxième RAT intégré dans un message de contrôle des ressources radio, RRC, de la première RAT.

21. Noeud maître pour prendre en charge une procédure de changement de cellule secondaire primaire conditionnelle, CPC, d'une cellule secondaire pour un équipement utilisateur, UE (10), dans lequel le noeud maître est configuré pour
transmettre, à l'UE, un message d'une première technologie d'accès radio, RAT, comprenant un message de reconfiguration pour une reconfiguration CPC de la cellule secondaire d'une deuxième RAT, la première RAT étant différente de la deuxième RAT ;
recevoir, à partir de l'UE, un premier message complet de la deuxième RAT intégré dans un autre message de la première RAT, le premier message complet indiquant que l'UE est en mesure de se conformer à la reconfiguration CPC ;
transmettre le premier message complet à un noeud secondaire ;
recevoir à partir de l'UE, un deuxième message complet, indiquant une condition remplie au niveau de l'UE, provenant de la deuxième RAT intégré dans un message de contrôle des ressources radio, RRC, de la première RAT ; et
transmettre le deuxième message complet au noeud secondaire.

22. Noeud secondaire pour prendre en charge une procédure de changement de cellule secondaire primaire conditionnelle, CPC, d'une cellule secondaire pour un équipement utilisateur, UE (10), dans lequel le noeud secondaire est configuré pour :
transmettre, à un noeud maître d'une première technologie d'accès radio, RAT, un message de reconfiguration pour une reconfiguration CPC de la cellule secondaire d'une deuxième RAT, la première RAT étant différente de la deuxième RAT ;
recevoir, à partir du noeud maître, un premier message complet de la deuxième RAT, le premier message complet indiquant que l'UE est en mesure de se conformer à la reconfiguration CPC ; et
recevoir, à partir du noeud maître, un deuxième message complet de la deuxième RAT indiquant une condition remplie au niveau de l'UE (10).
